# EUROPÄISCHE PATENTSCHRIFT

(11) **EP 2 569 353 B1**
(45) Veröffentlichungstag und Bekanntmachung des Hinweises auf die Patenterteilung: **29.07.2015**
(21) Anmeldenummer: 11717286.6
(22) Anmeldetag: 06.05.2011
(51) Int. Cl.: C08K 3/04, C08K 3/22, C08L 69/00

(54) **POLYMER-ZUSAMMENSETZUNG MIT WÄRME-ABSORBIERENDEN EIGENSCHAFTEN UND VERBESSERTEN FARBEIGENSCHAFTEN**
POLYMER COMPOSITION HAVING HEAT-ABSORBENT PROPERTIES AND IMPROVED DYEING PROPERTIES
COMPOSITION POLYMÈRE AYANT DES PROPRIÉTÉS D'ABSORPTION DE CHALEUR ET DES PROPRIÉTÉS CHROMATIQUES AMÉLIORÉES

(30) Priorität: 10.05.2010 IT RM20100228
(43) Veröffentlichungstag der Anmeldung: 20.03.2013
(73) Patentinhaber: Bayer Intellectual Property GmbH, 40789 Monheim (DE)
(72) Erfinder: MEYER, Alexander, 40489 Düsseldorf (DE); STOLLWERCK, Gunther, 47802 Krefeld (DE); REICHENAUER, Jörg, 47802 Krefeld (DE); SCAGNELLI, Andrea, I-24040 Bonate Sotto (BG) (IT); MALVESTITI, Gianmaria, I-24041 Brembate (BG) (IT); TIRONI, Massimo, I-24048 Treviolo (BG) (IT)
(74) Vertreter: BIP Patents
(86) Internationale Anmeldenummer: PCT/EP2011/057279
(87) Internationale Veröffentlichungsnummer: WO 2011/141366

(56) Entgegenhaltungen:
- JP-A- 2009 258 581
- US-A1- 2007 015 081
- US-A1- 2009 136 730

## Beschreibung

Die Erfindung betrifft eine Infrarotstrahlung-(IR)-absorbierende Polymer-Zusammensetzung enthaltend einen transparenten thermoplastischen Kunststoff, einen anorganischen Infrarotabsorber, nachfolgend auch als IR-Absorber bezeichnet, und mindestens ein anorganisches nanoskaliges Pigment sowie die Herstellung und Verwendung der erfindungsgemäßen Polymer-Zusammensetzungen und die daraus hergestellten Erzeugnisse. Insbesondere betrifft die vorliegende Erfindung Polymer-Zusammensetzungen, die eine Reduzierung unerwünschter Streueffekte, hervorgerufen durch anorganische IR-Absorber auf Wolframatbasis aufweisen, sowie die Verwendung der erfindungsgemäßen Polymer-Zusammensetzung enthaltend diese IR-Absorber zur Herstellung von Scheiben für den Einsatz in Gebäuden, Kraftfahrzeugen und Schienen- oder Luftfahrzeugen.

Verscheibungen aus Zusammensetzungen, enthaltend transparente thermoplastische Polymere wie z.B. Polycarbonat, bieten für den Einsatz im Fahrzeugbereich und für Gebäude viele Vorteile gegenüber herkömmlichen Verscheibungen aus Glas. Hierzu zählen z.B. erhöhte Bruchsicherheit und/oder Gewichtsersparnis, die im Fall von Automobilverscheibungen eine höhere Insassensicherheit bei Verkehrsunfällen und einen niedrigeren Kraftstoffverbrauch ermöglichen. Schließlich lassen transparente Werkstoffe, die transparente thermoplastische Polymere enthalten, aufgrund der einfacheren Formbarkeit eine wesentlich größere Designfreiheit zu.

Nachteilig ist allerdings, dass die hohe Wärmedurchlässigkeit (d.h. Durchlässigkeit für IR-Strahlung) von transparenten thermoplastischen Polymeren bei Sonneneinwirkung zu einer unerwünschten Erwärmung im Inneren von Fahrzeugen und Gebäuden führt. Die erhöhten Temperaturen im Innenraum vermindern den Komfort für die Insassen bzw. Bewohner und können erhöhte Anforderungen an die Klimatisierung nach sich ziehen, die wiederum den Energieverbrauch steigern und so die positiven Effekte wieder aufheben. Um dennoch der Forderung nach einem geringen Energieverbrauch verbunden mit einem hohen Insassenkomfort Rechnung zu tragen, sind Scheiben erforderlich, die mit einem entsprechenden Wärmeschutz ausgerüstet sind. Dies gilt insbesondere für den Automobilbereich.

Wie seit langem bekannt ist, entfällt der größte Teil der solaren Energie neben dem sichtbaren Bereich des Lichts zwischen 400 nm und 750 nm auf den Bereich des nahen Infrarots (NIR) zwischen 750 nm und 2500 nm. Eindringende Sonnenstrahlung wird z.B. im Inneren eines Automobils absorbiert und als langwellige Wärmestrahlung mit einer Wellenlänge von 5 µm bis 15 µm emittiert. Da in diesem Bereich übliche Verscheibungsmaterialien -insbesondere im sichtbaren Bereich transparente thermoplastische Polymere - nicht transparent sind, kann die Wärmestrahlung nicht nach außen abstrahlen. Man erhält einen Treibhauseffekt und der Innenraum heizt sich auf. Um diesen Effekt möglichst klein zu halten, sollte daher die Transmission der Verscheibungen im NIR möglichst minimiert werden. Übliche transparente thermoplastische Polymere wie z.B. Polycarbonat sind jedoch sowohl im sichtbaren Bereich, als auch im NIR transparent.

Es werden daher z.B. Zusätze benötigt, welche im NIR eine möglichst geringe Transparenz aufweisen ohne die Transparenz im sichtbaren Bereich des Spektrums nachteilig zu beeinflussen.

Unter den transparenten thermoplastischen Kunststoffen sind Polymere basierend auf Polymethylmethacrylat (PMMA) und Polycarbonat besonders gut für die Verwendung als Verscheibungsmaterial geeignet. Aufgrund der hohen Zähigkeit besitzt insbesondere Polycarbonat ein sehr gutes Eigenschaftsprofil für derartige Einsatzzwecke.

Um diesen Kunststoffen Infrarot-absorbierende Eigenschaften zu verleihen werden entsprechende Infrarotabsorber als Additive eingesetzt. Insbesondere sind hierfür IR-Absorber-Systeme interessant, die über ein breites Absorptionsspektrum im NIR-Bereich (Nahes Infrarot, 750 nm - 2500 nm) bei gleichzeitig geringer Absorption im sichtbaren Bereich (geringe Eigenfarbe) verfügen. Die entsprechenden Polymer-Zusammensetzungen sollen darüber hinaus eine hohe Thermostabilität sowie eine ausgezeichnete Lichtstabilität aufweisen.

Es ist eine Vielzahl von IR-Absorbern auf Basis organischer oder anorganischer Materialien bekannt, die in transparenten Thermoplasten eingesetzt werden können. Eine Auswahl derartiger Materialien ist z.B. in J. Fabian, H. Nakazumi, H. Matsuoka, Chem. Rev. 92, 1197 (1992), in US-A 5,712,332 oder JP-A 06240146 beschrieben.

IR-absobierende Additive auf Basis organischer Materialien haben allerdings häufig den Nachteil, dass sie eine geringe Stabilität gegenüber thermischer Belastung oder Bestrahlung aufweisen. So sind viele dieser Additive nicht genügend wärmestabil, um in transparente Thermoplaste eingearbeitet zu werden, da bei Ihrer Verarbeitung Temperaturen bis zu 350°C erforderlich sind. Darüber hinaus sind die Verscheibungen im Gebrauch oft über längere Zeiträume Temperaturen von mehr als 50°C, bedingt durch die Sonneneinstrahlung, ausgesetzt, was zur Zersetzung oder zum Abbau der organischen Absorbentien führen kann.

Ferner weisen die organischen IR-Absorber häufig nicht eine genügend breite Absorptionsbande im NIR-Bereich auf, so dass ihr Einsatz als IR-Absorber in Verscheibungsmaterialien ineffizient ist, wobei zusätzlich oft noch eine starke Eigenfarbe dieser Systeme auftritt, die in der Regel unerwünscht ist.

IR-absorbierende Additive auf Basis anorganischer Materialien sind im Vergleich zu organischen Additiven häufig deutlich stabiler. Auch ist der Einsatz dieser Systeme oft ökonomischer, da sie in den meisten Fällen ein deutlich günstigeres Preis/Leistungsverhältnis aufweisen. So haben Materialien auf Basis feinteiliger Boride, wie z.B. Lanthanhexaborid, sich als effiziente IR-Absorber erwiesen, da sie insbesondere über eine breite Absorptionsbande verfügen. Derartige Boride auf Basis von La, Ce, Pr, Nd, Tb, Dy, Ho, Y, Sm, Eu, ER, Tm, Yb, Lu, Sr, Ti, Zr, Hf, V, Ta, Cr, Mo, W und Ca sind u.a. z.B. in DE 10392543 oder EP 1 559 743 beschrieben.

Ein Nachteil dieser Additive ist allerdings ihre signifikante Eigenfarbe. Diese Borid-haltigen Additive verleihen dem transparenten Kunststoff nach Einarbeitung eine charakteristische grüne Färbung, die häufig unerwünscht ist, da sie den Spielraum für eine neutrale Farbgebung stark einschränkt.

Zur Kompensation der Eigenfarbe werden oft größere Mengen weiterer Farbmittel eingesetzt, was jedoch die optischen Eigenschaften der Zusammensetzung beeinträchtigt und zu einer deutlich verringerten Transmission im sichtbaren Bereich führt. Dies ist insbesondere bei Fahrzeugverscheibungen unerwünscht oder in speziellen Fällen in denen die Sicht des Fahrers nicht beeinträchtigt werden darf unzulässig.

Es zeigte sich, dass IR-absorbierende Additive aus der Gruppe der Wolframate über eine im Vergleich zu den aus dem Stand der Technik bekannten anorganischen IR-Absorbern auf Borid-Basis geringere Eigenabsorption im sichtbaren Spektralbereich verfügen und zu thermoplastischen Materialien mit geringerer Eigenfarbe führen. Darüberhinaus besitzen sie eine wünschenswerte breite Absorptionscharakteristik im NIR-Bereich. Bei diesen Wolframaten handelt es sich um Wolframoxide auf Basis von WyOz (W = Wolfram, O = Sauerstoff; z/y = 2,20 - 2,99) oder auf Basis von MxWyOz (M = H, He, Alkalimetall, Erdalkalimetall, Seltene Erden, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi; x/y = 0,001-1, z/y = 2,2-3,0).

Die Herstellung und der Einsatz dieser Stoffe in thermoplastischen Materialien ist prinzipiell bekannt und beispielsweise in H. Takeda, K. Adachi, J. Am. Ceram. Soc. 90, 4059 - 4061, (2007), WO 2005037932, JP 2006219662, JP 2008024902, JP 2008150548, WO 2009/059901 und JP 2008214596 beschrieben.

Die niedrige Eigenfärbung dieser Systeme ist von Vorteil, da so eine große Freiheit in der Farbgebung für das jeweilige Endprodukt ermöglicht wird. Die endgültige Farbe wird durch Zugabe weiterer Pigmente bzw. Farbstoffe erreicht. Ferner weisen die IR-absorbierenden Polycarbonatzusammensetzungen ein ökonomisch vertretbares oder sogar interessantes Preis/Leistungsverhältnis auf.

Prinzipiell sind die IR-absorbierende Additive aus der Gruppe der Wolframate aufgrund der oben beschriebenen Vorteile für transparente Thermoplaste wie Polymethylmathacrylat und Polycarbonat geeignet. Allerdings zeigte sich, dass diese Additive in transparenten thermoplastischen Zusammensetzungen zu unerwarteten Farbeindrücken unabhängig von ihrer Eigenfarbe führen.

Der Farbeindruck eines nicht transparenten Gegenstandes ist auf das reflektierte Licht zurückzuführen. Ein Gegenstand, welcher z. B. die langwelligen Bestandteile des Lichts absorbiert, erscheint blau, da die verbleibenden kürzer welligen Anteile des Spektrums remittiert werden. Diese Anmeldung betrifft jedoch transparente Gegenstände, wie z.B. Fensterscheiben. Unter transparenten Gegenständen sind an dieser Stelle Körper gemeint, die eine Transmission (unbewittert, nicht gealtert) von mindestens 10 % und eine Trübung (Haze) von weniger als 3,0 %, bevorzugt weniger als 2,5 %, weiter bevorzugt weniger als 2,0 %, und besonders bevorzugt weniger als 1,5 %, aufweisen. Bei transparenten Körpern steht im Vergleich zu nicht transparenten Gegenständen normalerweise nicht die remittierte sondern die transmittierte Farbe im Vordergrund. Der Gegenstand wirkt also wie ein Farbfilter. Um die Transparenz der Scheibe nicht zu beeinträchtigen, kommen bevorzugt Farbmittel zum Einsatz, die sich in der Polymermatrix lösen oder aber eine so geringe Partikelgröße aufweisen, daß sie keine Trübung verursachen, wobei keine Trübung im Sinne der vorliegenden Erfindung eine Trübung von weniger als 3 % bei gegebener Schichtdicke bedeutet, gemessen gemäß ASTM D1003.

Tatsächlich führen die eingesetzten IR-Absorberpartikel auf Wolframatbasis nicht zu einer Trübung des entsprechenden Verscheibungselements (Trübung <3%).

Allerdings stellte sich heraus, dass diese Partikel, deren Größe bevorzugt im Nanometerbereich liegt, ab einer gewissen Konzentration Streueffekte in der sie einbettenden Matrix unabhängig von der Art und sonstigen Eigenschaften der Partikel erzeugen können. Während diese Streuung die Transmission und damit die Transparenz des Artikels nur unmerklich beeinflußt, wird jedoch der Farbeindruck des Artikels durch das gestreute Licht, insbesondere in Abhängigkeit vom Betrachtungswinkel, z.T. stark verändert.

Die IR-absorbierenden Additive aus der Gruppe der Wolframate führen folglich im Fertigteil, also z.B. in einer transparenten Scheibe, unter bestimmten Lichtbedingungen und Beobachtungswinkeln zu unerwünschten Farbreflexen. So zeigen entsprechende Scheiben je nach eingesetzter Konzentration des anorganischen IR-Absorbers einen bläulichen bis violetten Schimmer. Dieser Farbeindruck resultiert nicht von der Eigenfarbe der gewählten zugesetzten Pigmente und Absorber, sondern ist auf Streueffekte der Nanopartikel zurückzuführen, die insbesondere bei Beobachtungswinkeln zwischen 1 und 60°, die außerhalb des Reflexionswinkels liegen, zu beobachten sind. Durch diese Streuung kann der Gesamt-Farbeindruck des entsprechenden Artikels, z.B. ein Fahrzeug oder ein Gebäude, negativ beeinflusst werden.

Der Streueffekt wird wie beschrieben häufig als ein bläulich-violetter Farbeindruck empfunden. Wünschenswert ist häufig eine neutraler Farbeindruck, d.h., daß der natürlichen Farbeindruck nicht durch Streueffekte gestört wird. Dass heißt die durch den Streueffekt hervorgerufene Farbe muß einerseits relativ nahe am Unbuntpunkt sein und andererseits nahe an der Eigenfarbe des Bauteils sein.

Es muss betont werden, dass dieser Farbeffekt nicht durch die normale absorbierte bzw. transmittierte Farbe resultiert. Dieses Phänomen wird nur durch gestreutes Licht verursacht. Normalerweise tragen Farbstoffe oder Farbpigmente nicht zu diesem Farbeffekt bei. Nur bestimmte Additive, wie z.B. die nanoskaligen Wolframat-basierten IR-Absorber, verursachen diesen Effekt. Ferner muss darauf hingewiesen werden, dass der Streueffekt nur unter bestimmten Lichtverhältnissen und definierten Betrachtungswinkeln ausgeprägt ist. Dies ist z.B. der Fall wenn der Artikel - bevorzugt eine Scheibe - unter guten Lichtverhältnissen, d.h. bei Sonnenbestrahlung und bei Beobachtungswinkeln zwischen 1 und 60° betrachtet wird.

Die bläuliche Streuung wird durch das IR-Additiv, welches aus feinen Partikeln besteht, hervorgerufen. Diese Partikel, die im Durchschnitt eine Größe, welche sich z.B. mittels TEM (Transmissionselektronenmikroskopie) ermittelt lässt, von bevorzugt kleiner 200 nm, insbesondere bevorzugt kleiner 100 nm aufweisen, verursachen einen Streueffekt und können somit auch zu unerwünschten Farbeindrücken führen. Um diesen Effekt zu minimieren, könnte der Größendurchmesser der Partikel verringert oder die Menge der Partikel in der Matrix begrenzt werden. Dies ist allerdings aufwendig, da die Partikel entweder sehr fein gemahlen werden müssen und die Gefahr einer Reaglomeration besteht bzw. bei einer zu geringen Partikelkonzentration der gewünschte Effekt der IR-Absorption nicht mehr erzielt werden kann.

Es ist bekannt, dass feinteilige Partikel eine sogenannte Rayleighstreuung verursachen können. Diese Rayleighstreuung ist z.B. in C.F. Bohren, D. Huffman, Absorption and scattering of light by small particles, John Wiley, New York 1983 beschrieben. Das Streuverhalten von Nanopartikeln auf Wolframatbasis ist bislang nicht beschrieben worden. Die Konzentrationsbereiche, in denen es zu den beschriebenen farblichen Streueffekten in einer thermoplastischen Matrix kommt, waren bislang ebenfalls nicht bekannt. Maßnahmen, die zur Abschwächung des beschriebenen Effektes dienen, waren aus dem derzeitigen Stand der Technik nicht offensichtlich.

Weiterhin sind thermoplastische Formmassen bekannt, die sowohl IR-Absorber als auch Farbpigmente, unter anderem Ruße, enthalten, um sowohl die Wärme-absorbierenden Eigenschaften als auch die Farbgebung zu beeinflussen. Maßnahmen zur Reduktion der von IR-absorbierenden Partikeln auf Wolframatbasis verursachten Streustrahlung sind jedoch in der Literatur ebensowenig beschrieben wie dieser unerwünschte Effekt.

Zusammensetzungen auf Basis von Polycarbonat enthaltend anorganische IR-Absorber auf Wolframatbasis sind in verschiedenen Publikationen beschrieben.

Aus der WO 2007/008476 A1 sind Formmassen bekannt, die IR-Absorber auf Borid-Basis und spezielle Ruße enthalten, wobei durch die Kombination dieser Komponenten ein synergistischer Effekt hinsichtlich der IR-absorbierenden Eigenschaften erzielt werden soll.

US2006/0251996 beschreibt anorganische IR-Absorber, darunter u.a. auch Wolframate, die in Verbindung mit weiteren Pigmenten, z.B. auch Ruß eingesetzt werden können. Jedoch werden in US 2006/0251996 weder das Problem der Farbstreuung noch Zusammensetzungen mit einem bestimmten Verhältnis von IR-Absorber zu Ruß beschrieben.

In keinem der als Stand der Technik beschriebenen Dokumente werden Streu- bzw. Reflexionseffekte anorganischer IR-Absorber in Thermoplasten und die daraus resultierenden Probleme beschrieben.

Die Aufgabe der vorliegenden Erfindung war somit die Bereitstellung von transparenten Polycarbonatzusammensetzungen mit keiner oder geringer Trübung, einer guten IR-Absorption und minimierten Farbeffekten durch Streuung, die nicht die Nachteile der aus dem Stand der Technik bekannten Zusammensetzungen aufweisen.

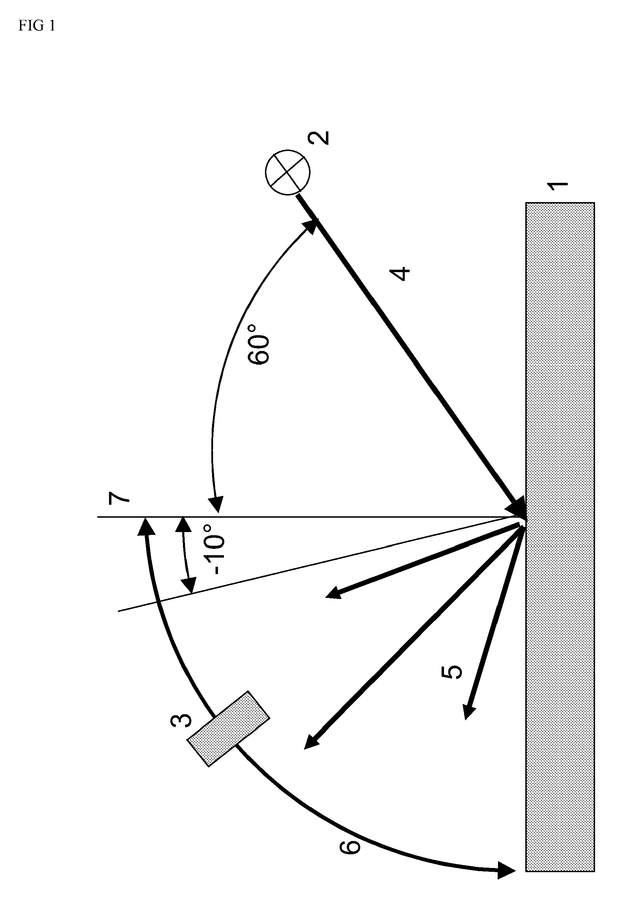

Eine weitere Aufgabe der vorliegenden Erfindung war die Bereitstellung von hoch IR-absorbierenden Scheiben mit geringer Eigenfarbe und hoher Transparenz (Transmission > 10 %). Zur Erfassung und Messung der Streueffekte werden Prüfkörper unter einem Einfallswinkel von 60° gegenüber der Vertikalen mit einer weißen Punktlichtquelle beleuchtet mit einem geringem Öffnungswinkel von unter 2° und die Streuung unter einem Ausfallswinkel von 30° bis -80° gegenüber der Vertikalen gemessen (Vgl. FIG. 1). Ferner werden die CIELAB Farbkoordinaten L*, a*, b* mit Lichtart D65 und 10°-Beobachter nach ASTM E 308 berechnet. Dieses Farbsystem ist z.B. in Manfred Richter: Einführung in die Farbmetrik. 1984 ISBN 3-11-008209-8 beschrieben. Für die Evaluation der Farbe wird der b* Wert beim Ausfallswinkel von -10° verwendet. Dieser b*-Wert wird nachfolgend als b* (60°) bezeichnet, wobei sich der Wert von 60° auf den Einfallswinkel bezieht.

Die Messungen wurden mit einem Goniophotometer "Gon360-105" (Gon360 mit Simultanspektrometer CAS 140) der Firma Instrument Systems durchgeführt. Der Messaufbau ist in Abb. 1 gezeigt, wobei
- 1: Probe,
- 2: Weißlichtquelle,
- 3: Detektor mit Farbkoordinatenauswertung,
- 4: Eingestrahltes Licht unter 60° gegenüber normal (der Senkrechten),
- 5: Gestreutes und reflektiertes Licht,
- 6: Winkelbereich, in welchem der Detektor die Farbe misst, und
- 7: Senkrechte Einfallsrichtung (Normalrichtung)
bedeuten.

Darüber hinaus wird die hemispärische Reflexion des Prüfkörpers nach ASTM E 1331 gemessen und die CIELAB Farbkoordinaten L*, a*, b* mit Lichtart D65 und 10°-Beobachter nach ASTM E 308 berechnet. Der entsprechende b*-Wert wird nachfolgend mit b*(hemisphärisch) bezeichnet.

Ein Maß für die Größe des Streueffektes ist also die Messung des b*-Wertes in Reflexion (b* (60°)), bei welcher das gestreute Licht gemessen wird. Je näher der b* (60°) an Null liegt, desto geringer ist die Reflexion im blauen Bereich.

Der b* (60°) Wert des reflektierten Lichts bei -10° Ausfallswinkel der erfindungsgemäßen Formkörper liegt vorzugsweise im Bereich von -2.5 bis 0,0, bevorzugt von -2,0 bis 0,0.

Die Grenze von -2.5 bzw. -2,0 für b* (60°) kommt aus der Anforderung heraus, dass für Autoscheiben eine möglichst neutralgraue Farbe gefordert ist, die Nanoteilchen aber immer eine bläuliche Streuung hervorrufen.

Der Absolutwert des Wertes Δb*, berechnet aus der Differenz von b*(60°) und der hemisphärischen Reflexion b*(hemisphärisch), ist bei erfindungsgemäßen Formkörper kleiner als 1,0.

Die Grenze von Δb* < 1,0 ergibt sich durch den für das menschliche Auge erfassbaren Farbunterschied von Delta E (berechnet nach DIN 6174), der kleiner als 1,0 ist. Da es sich bei dieser Streuung im wesentlichen um einen bläuliche Streuung handelt, wird hier die Rechnung vereinfacht auf die Differenz Δb*, die sich auf den Blauanteil des Lichts bezieht.

Bei der Untersuchung des Streuungsverhaltens stellte sich heraus, dass die unerwünschten Streuungseffekte stark von der Konzentration des Wolframat-basierten IR-Absorbers in der Polymermatrix abhängig sind.

Niedrige Konzentrationen, d.h. Konzentrationen unterhalb von 0,003 Gew.-% (bezogen auf den Feststoffgehalt an Wolframat) stören den Farbeindruck nicht, da die Streuung von blauem Licht relativ gering ist (der b* (60°)-Wert liegt im Bereich von 0,0 bis -2,5 bevorzugt zwischen 0,0 und - 2,0), jedoch weisen Zusammensetzungen mit einer solch niedrigen Konzentration aber auch eine unzureichende IR-Absorption auf (T_{DS} >70%).

Überraschenderweise zeigte sich, dass bestimmte anorganische nanoskalige Pigmente den unerwünschten Streuungseffekt, insbesondere bei Konzentrationen des IR-Absorbers > 0,0030 Gew.-% (bezogen auf den Fesetstoffgehalt an Wolframat) vermindern, ohne die Transparenz deutlich zu beeinflussen und ohne den Gesamtfarbeindruck negativ zu verändern (neutraler Farbeindruck).

Andere Pigmente und Farbstoffe sind hingegen weniger effektiv oder unwirksam bzw. verfälschen den ursprünglichen Farbeindruck oder sind, wie organische Farbmittel, nicht langzeitstabil und können so zu unerwünschten Farbeffekten führen. Zudem ist der zusätzliche Einsatz von Farbmitteln teuer und damit nicht ökonomisch.

Es wurde gefunden, dass insbesondere bestimmte Ruße, vorzugsweise nanoskalige Ruße, das beschriebene Phänomen einer bläulichen Streuung in bestimmten Konzentrationsbereichen deutlich reduzieren. Es war dabei insbesondere überraschend, dass bereits geringe Konzentrationen im Bereich von 0,0005 Gew.-% - 0,0035 Gew.-% ausreichen, um den Steueffekt zu vermindern.

Ferner war überraschend, dass nur bestimmte Verhältnisse von Ruß zu IR-absorbierendem Additiv auf Wolframatbasis, die Streustrahlung vermindern. Zu hohe Konzentrationen an Ruß vermindern drastisch die Transmission (<10 %) und verändern die Eigenfarbe der Zusammensetzung, während eine zu geringe Konzentration an Ruß nur einen unzureichenden Effekt hat. Dasselbe gilt für die Konzentration der IR-Absorber auf Wolframatbasis.

Überraschenderweise wurde somit gefunden, daß nur in einem eng definierten Konzentrationsbereich sowohl von IR-Absorber als auch von Ruß bzw. einem definiertem Verhältnis dieser Komponenten zueinander die unerwünschten Farbeffekte durch Streuung ohne deutliche negative Beeinträchtigung anderer physikalischer Eigenschaften wie Transmission und Trübung verhindern oder zumindest signifikant reduziert werden kann.

Die Aufgabe wurde erfindungsgemäß durch eine Polymerzusammensetzung gelöst, enthaltend
a) Polycarbonat,
b) einen anorganischen IR Absorber aus der Gruppe der Wolframverbindungen mit einem Partikeldurchmesser von kleiner als 200 nm und größer als 5 nm vom Typ
   b1) WyOz (W = Wolfram, O = Sauerstoff; z/y = 2,20 - 2,99); und/oder
   b2) MxWyOz (M = H, He, Alkali metall, Erdalkalimetall, Metall aus der Gruppe der Seltenen Erden, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi; x/y = 0,001-1,000; z/y = 2,2-3,0), wobei als M die Elemente H, Cs, Rb, K, Tl, In, Ba, Li, Ca, Sr, Fe und Sn bevorzugt sind, wobei hiervon Cs ganz besonders bevorzugt ist. Besonders bevorzugt sind Ba_{0,3}WO_{3,} Tl_{0,33}WO₃, K_{0,33}WO₃, Rb_{0,33}WO₃, Cs_{0,33}WO₃, Na_{0,33}WO₃, Na_{0,75}WO₃, sowie deren Gemische. In einer besonderen Ausführungsform der vorliegenden Erfindung ist die alleinige Verwendung von Cs_{0,33}WO₃ als anorganischem IR Absorber ganz besonders bevorzugt. Ebenfalls bevorzugt sind Cs/W-Verhältnisse von 0,20 und 0,25; und/oder
   b3) Zn_{w}MxWyOz (M = mindestens ein Element ausgewählt aus der Gruppe bestehend aus H, He, Alkali metall, Erdalkalimetall, Metall aus der Gruppe der Seltenen Erden, Mg, Zr, Cr, Mn, Fe, Ru, Co, Rh, Ir, Ni, Pd, Pt, Cu, Ag, Au, Cd, Al, Ga, In, Tl, Si, Ge, Sn, Pb, Sb, B, F, P, S, Se, Br, Te, Ti, Nb, V, Mo, Ta, Re, Be, Hf, Os, Bi; x/y = 0,001-1,000; z/y = 2,2-3,0; w = 0,001 - 0,015), wobei als M die Elemente H, Cs, Rb, K, Tl, In, Ba, Li, Ca, Sr, Fe und Sn bevorzugt sind, wobei hiervon Cs ganz besonders bevorzugt ist. Weiterhin besonders bevorzugt ist Zink-dotiertes Ba_{0,33}WO_{3,} Tl_{0,33}WO₃, K_{0,33}WO₃, Rb_{0,33}WO₃, Cs_{0,33}WO₃, Na_{0,33}WO₃, Na_{0,75}WO_{3,} sowie deren Gemische.

   In einer weiteren Ausführungsform der vorliegenden Erfindung ist die alleinige Verwendung von Zn_{w}Cs_{0,33}WO₃ (mit w = 0,001 - 0,015) als anorganischem IR Absorber ganz besonders bevorzugt. Ebenfalls bekannt sind Verbindungen mit Cs/W-Verhältnissen von 0,20 bis 0,25.
   Die vorgenannten Wolframverbindungen vom Typ b1), b2) und b)3 werden im Rahmen dieser Erfindung auch als Wolframate bzw. anorganisches Wolframat bezeichnet.
   Das IR-absorbierende anorganische Wolframat wird bevorzugt in organischer Matrix dispergiert. Bevorzugt werden die Wolframate in einer Menge von 0,0075 Gew.-% - 0,0750 Gew.-%, bevorzugt 0,0100 Gew.-% - 0,0500 Gew.-% und besonders bevorzugt 0,0125 Gew.-% - 0,0375 Gew.-% berechnet als Feststoffanteil an Wolframat in der Polymer-Gesamtzusammensetzung eingesetzt. Feststoffanteil an Wolframat meint in diesem Zusammenhang das Wolframat als Reinstoff und nicht eine Suspension oder andere Zubereitung, enthaltend den Reinstoff.
c) mindestens einen nanoskaligen Ruß,
   Der nanoskalige Ruß wird in der erfindungsgemäßen Zusammensetzung bevorzugt in Konzentrationen von 0,0005 Gew.-% - 0,0035 Gew.-%, insbesondere bevorzugt von 0,0009 Gew. % - 0,0030 Gew.-% und ganz besonders bevorzugt in Konzentrationen von 0,0010 Gew.-% bis 0,0028 Gew-% eingesetzt.
   und
d) optional Additive, wie Stabilisatoren, Antioxidantien, Entformungsmittel, Flammschutzmittel, Farbmittel, Thermostabilisatoren, UV-Stabilisatoren, oder optische Aufheller.
Gegenstand der Erfindung ist ferner die Verwendungen gemäß Ansprüche 10 und 11 sowie das Mehrschichterzeugnis gemäß Anspruch 12.

Polycarbonate im Sinn der vorliegenden Erfindung sind sowohl Homopolycarbonate als auch Copolycarbonate; die Polycarbonate können in bekannter Weise linear oder verzweigt sein. Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Die Herstellung der Polycarbonate erfolgt in bekannter Weise aus Diphenolen, Kohlensäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne', BAYER AG, "Polycarbonates" in Encyclopedia of Polymer Science and Engineering, Volume 11, Second Edition, 1988, Seiten 648-718 und schliesslich auf Dres. U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Für die Herstellung der Polycarbonate geeignete Diphenole sind beispielsweise Hydrochinon, Resorcin, Dihydroxydiphenyle, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, alpha - alpha '-Bis-(hydroxyphenyl)-diisopropylbenzole, Phtalimidine abgeleitet von Isatin- oder Phenolphthaleinderivaten sowie deren kernalkylierte und kernhalogenierte Verbindungen.

Bevorzugte Diphenole sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hdydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan und 1 , 1-Bis-(4-hydroxyphenyl)-3,3,5-trimethylcyclohexan.

Besonders bevorzugte Diphenole sind 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan.

Diese und weitere geeignete Diphenole sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie "H. Schnell, Chemistry and Physics of Polycarbonates, Interscience Publishers, New York 1964" sowie in JP-A 62039/1986, JP-A 62040/1986 und JP-A 105550/1986 beschrieben.

Im Fall der Homopolycarbonate ist nur ein Diphenol eingesetzt, im Fall der Copolycarbonate sind mehrere Diphenole eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind sowohl Monophenole als auch Monocarbonsäuren. Geeignete Monophenole sind Phenol selbst, Alkylphenole wie Kresole, p-tert.-Butylphenol, Cumylphenol, p-n-Octylphenol, p-isoOctylphenol, p-n-Nonylphenol und p-iso-Nonylphenol, Halogenphenole wie p-Chlorphenol, 2,4-Dichlorphenol, p-Bromphenol und 2,4,6-Tribromphenol, 2,4,6-Trijodphenol, p-Jodphenol, sowie deren Mischungen.

Bevorzugte Kettenabbrecher sind Phenol, Cumylphenol und/oder p-tert.-Butylphenol.

Geeignete Monocarbonsäuren sind weiterhin Benzoesäure, Alkylbenzoesäuren und Halogenbenzoesäuren.

Bevorzugte Kettenabbrecher sind ferner die Phenole welche ein oder mehrfach mit C1 bis C30-Alkylresten, linear oder verzweigt, bevorzugt unsubstituiert oder mit tert.-Butyl substituiert sind.

Die Menge an einzusetzendem Kettenabbrecher beträgt bevorzugt 0,1 bis 5 Mol%, bezogen auf Mole an jeweils eingesetzten Diphenolen. Die Zugabe der Kettenabbrecher kann vor, während oder nach der Phosgenierung erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2 , 4 , 6-Dimethyl-2,4,6-tri(4-hydroxyphenyl)-heptan, 1, 3, 5-Tri(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenylisopropyl)-phenol, 2,6-Bis-(2-hydroxy-5'-methyl-benzyl)-4-methylphenol, 2-(4-hydroxyphenyl)-2-(2,4-dihydroxyphenyl)-propan, Hexa-(4(4-hydroxyphenylisopropyl)-phenyl)-orthoterephthalsäureester, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol%, bezogen wiederum auf Mole an jeweils eingesetzten Diphenolen.

Die Verzweiger können entweder mit den Diphenolen und den Kettenabbrechern in der wässrig alkalischen Phase vorgelegt werden, oder in einem organischen Lösungsmittel gelöst vor der Phosgenierung zugegeben werden. Im Fall des Umesterungsverfahrens werden die Verzweiger zusammen mit den Diphenolen eingesetzt.

Die aromatischen Polycarbonate der vorliegenden Erfindung besitzen Gewichtsmittelmolekulargewichte Mw (ermittelt durch Gelpermeationschromatographie und Eichung mit Polycarbonatstandard) zwischen 5000 und 200.000, vorzugsweise zwischen 10.000 und 80.000 und besonders bevorzugt zwischen 15.000 und 40.000 (dies entspricht Molekulargewichten zwischen 12.000 und 330.000, vorzugsweise zwischen 20.000 und 135.000 und besonders bevorzugt zwischen 28.000 und 69.000 ermittelt durch Eichung mit Polystyrolstandard)

Die erfindungsgemäßen Polymer-Zusammensetzungen können neben den erfindungsgemäßen Stabilisatoren optional noch weitere übliche Polymeradditive enthalten, wie z.B. die in EP-A 0 839 623, WO-A 96/15102, EP-A 0 500 496 oder "Plastics Additives Handbook", Hans Zweifel, 5th Edition 2000, Hanser Verlag, München) beschriebenen Antioxidantien, Entformungsmittel, Flammschutzmittel, Farbmittel, Thermostabilisatoren, UV-Stabilisatoren, oder optische Aufheller in den für die jeweiligen Thermoplasten üblichen Mengen, wobei von den genannten optional enthaltenen weiteren üblichen Polymeradditiven Farbmittel in einer speziellen Ausführungsform der Erfindung besonders bevorzugt sind. Bevorzugt werden die weiteren Polymeradditive in Mengen von 0 Gew.-% bis zu 5 Gew.-%, weiter bevorzugt 0,1 Gew.-% bis 1,0 Gew.-%, jeweils bezogen auf die Menge der jeweiligen Polymer-Gesamtzusammensetzungen eingesetzt. Auch Mischungen mehrerer Zusatzstoffe sind geeignet.

Der Partikeldurchmesser der erfindungsgemäßen Wolframate ist kleiner als 200 nm, besonders bevorzugt kleiner als 100 nm, wobei die Partikeldurchmesser größer als 5 nm, weiter bevorzugt gößer als 10 nm und besonders bevorzugt größer als 15 nm sind. Die Partikel sind im sichtbaren Bereich des Spektrums durchlässig, wobei durchlässig bedeutet, dass die Absorption dieser IR-Absorber im sichtbaren Bereich des Lichts verglichen mit der Absorption im IR-Bereich gering ist und der IR-Absorber zu keiner deutlich erhöhten Trübung oder deutlichen Verminderung der Transmission (im sichtbaren Bereich des Lichts) der Zusammensetzung oder dem jeweiligen Endprodukt führt.

Die Wolframate können eine amorphe, eine kubische, tetragonale oder hexagonale Wolfram-Bronze Struktur aufweisen, wobei M bevorzugt für H, Cs, Rb, K, Tl, Ba, In, Li, Ca, Sr, Fe und Sn steht.

Zur Herstellung derartiger Materialien werden z.B. Wolframtrioxid, Wolframdioxid, ein Hydrat eines Wolframoxids, Wolframhexachlorid, Ammoniumwolframat oder Wolframsäure und gegebenenfalls weitere Salze enthaltend das Element M, wie z.B. Cäsiumcarbonat, in bestimmten stöchiometrischen Verhältnisse gemischt, so dass die molaren Verhältnisse der einzelnen Komponenten durch die Formel MxWyOz wiedergegeben werden. Diese Mischung wird anschließend bei Temperaturen zwischen 100 °C und 850 °C in einer reduzierenden Atmosphäre, z.B. einer Argon-Wasserstoff-Atmosphäre, behandelt und abschließend das erhaltene Pulver bei Temperaturen zwischen 550 °C und 1200 °C unter Inertgasatmosphäre getempert.

Zur Herstellung der erfindungsgemäßen anorganischen IR-Absorber Nanopartikel kann der IR-Absorber mit den unten beschriebenen Dispergiermitteln und weiteren organischen Lösemitteln, wie z.B. Toluol, Benzol oder ähnliche aromatische Kohlenwasserstoffe vermischt und in geeigneten Mühlen, wie z.B. Kugelmühlen, unter Zugabe von Zirkoniumoxid (z.B. mit einem Durchmesser von 0,3 mm) gemahlen werden, um die gewünschte Partikelgrößenverteilung herzustellen. Man erhält die Nanopartikel in Form einer Dispersion. Nach Mahlung können gegebenenfalls weitere Dispergiermittel zugesetzt werden. Das Lösungsmittel wird bei erhöhten Temperaturen und reduziertem Druck entfernt.

Die Größe (Durchmesser) der Partikel kann mit Hilfe der Transmissionselektronenspektroskopie (TEM) bestimmt werden. Derartige Messungen an IR-Absorber-Nanopartikeln sind z.B. in Adachi et al., J. Am. Ceram. Soc. 2008, 91, 2897-2902, beschrieben.

Die Herstellung der erfindungsgemäßen Wolframate ist z.B. in EP 1 801 815 genauer beschrieben und sie sind kommerziell z.B. bei der Firma Sumitomo Metal Mining Co., Ltd. (Japan) unter der Bezeichnung YMDS 874 erhältlich.

Für den Einsatz in transparenten Thermoplasten werden die so erhaltenen Partikel in einer organischen Matrix dispergiert, z.B. in einem Acrylat, und ggf. wie oben beschrieben in einer Mühle unter Verwendung geeigneter Hilfsstoffe wie z.B. Zirkoniumdioxid und ggf. unter Verwendung von organischen Lösungsmitteln wie zum Beispiel Toluol, Benzol oder ähnlichen Kohlenwasserstoffen gemahlen.

Geeignete Polymer-basierte Dispergiermittel sind vor allem Dispergiermittel, die eine hohe Lichttransmission aufweisen, wie z.B. Polyacrylate, Polyurethane, Polyether, Polyester oder Polyesterurethane sowie davon abgeleitete Polymere.

Als Dispergiermittel bevorzugt sind Polyacrylate, Polyether und Polyester-basierte Polymere, wobei als hochtemperaturstabile Dispergiermittel Polyacrylate wie z.B. Polymethylmethacrylat und Polyester besonders bevorzugt sind. Es können auch Mischungen dieser Polymere oder auch Copolymere auf Acrylat-basis eingesetzt werden. Derartige Dispergierhilfsmittel und Methoden zur Herstellung von Wolframatdispersionen sind z.B. in der JP 2008214596 sowie in Adachi et al. J. Am. Ceram. Soc. 2007, 90 4059- 4061, beschrieben.

Für die vorliegende Erfindung geeignete Dispergiermittel sind kommerziell erhältlich. Insbesondere sind Dispergiermittel auf Polyacrylat-Basis geeignet. Derart geeignete Dispergiermittel sind z.B. unter den Handelsnamen EFKA^{®}, z.B. EFKA^{®} 4500 und EFKA^{®} 4530 bei Ciba Specialty Chemicals erhältlich. Polyesterhaltige Dispergiermittel sind ebenfalls geeignet. Sie sind beispielsweise unter den Handelsnamen Solsperse^{®}, z.B. Solsperse^{®} 22000, 24000SC, 26000, 27000 von Avecia erhältlich. Ferner sind polyetherhaltige Dispergiermittel z.B. unter den Handelsnamen Disparlon^{®} DA234 und DA325 der Firma Kusumoto Chemicals bekannt. Auch Polyurethan basierte Systeme sind geeignet. Polyurethan-basierte Systeme sind unter dem Handelsnamen EFKA^{®} 4046, EFKA^{®} 4047 von Ciba Specialty Chemicals erhältlich. Texaphor^{®} P60 und P63 sind entsprechende Handelsnamen der Cognis.

Die Menge des IR-Absorbers im Dispergiermittel beträgt 0,2 Gew.-% bis 50,0 Gew-%, bevorzugt 1,0 Gew.-% - 40,0 Gew-%, weiter bevorzugt 5,0 Gew-% - 35,0 Gew-%, und am stärksten bevorzugt 10,0 Gew-% - 30,0 Gew-% bezogen auf die erfindungsgemäß eingesetzte Dispersion des anorganischen IR-Absorbers. In der Gesamtzusammensetzung der gebrauchsfertigen IR-Absorberformulierung können neben dem IR-Absorber-Reinstoff und dem Dispergiermittel noch weitere Hilfsstoffe wie zum Beispiel Zirkoniumdioxid sowie Restlösemittel wie zum Beispiel Toluol, Benzol oder ähnliche aromatische Kohlenwasserstoffe enthalten sein.

Das IR-absorbierende anorganische Wolframat wird bevorzugt in organischer Matrix dispergiert. Die Wolframate werden in einer Menge von 0,0075 Gew.-% - 0,0750 Gew.-%, bevorzugt 0,0100 Gew.-% - 0,0500 Gew.-% und besonders bevorzugt 0,0125 Gew.-% - 0,0375 Gew.-% berechnet als Feststoffanteil an Wolframat in der Polymer-Gesamtzusammensetzung eingesetzt. Feststoffanteil an Wolframat meint in diesem Zusammenhang das Wolframat als Reinstoff und nicht eine Suspension oder andere Zubereitung, enthaltend den Reinstoff.

In einer weiteren Ausführungsform können optional neben den erfindungsgemäßen Wolframaten als IR-Absorber zusätzlich weitere IR-Absorber verwendet werden, wobei deren Anteil bezüglich Menge und/oder Leistung in einer derartigen Mischung aber jeweils unterhalb derer der oben beschriebenen Wolframate liegt. Bei Mischungen sind hierbei Zusammensetzungen bevorzugt, die zwei bis einschließlich fünf und besonders bevorzugt zwei oder drei unterschiedliche IR-Absorber enthalten. In einer besonderen Ausführungsform der vorliegenden Erfindung enthält die erfindungsgemäße Polymer-Zusammensetzung keinerlei anorganische IR-Absorber vom Typ der Metallboride wie beispielsweise Lanthanhexaborid, LaB₆.

Geeignete zusätzliche organische Infrarot-Absorber sind nach Stoffklassen z.B. in M. Matsuoka, Infrared Absorbing Dyes, Plenum Press, New York, 1990 beschrieben. Besonders geeignet sind Infrarot-Absorber aus den Klassen der Phthalocyanine, der Naphthalocyanine, der Metallkomplexe, der Azofarbstoffe, der Anthraquinone, der Quadratsäurederivate, der Immoniumfarbstoffe, der Perylene, der Quaterylene sowie der Polymethine. Davon sind ganz besonders Phthalocyanine und Naphthalocyanine geeignet.

Aufgrund der verbesserten Löslichkeit in Thermoplasten sind Phthalocyanine und Naphthalocyanine mit sterisch anspruchsvollen Seitengruppen vorzuziehen, wie beispielsweise Phenyl, Phenoxy, Alkylphenyl, Alkylphenoxy, tert-Butyl, (-S-Phenyl), -NH-Aryl, -NH-Alkyl und ähnliche Gruppen.

Weiterhin können Verbindungen wie Indiumoxid, das mit 2 bis 30 Atom%, vorzugsweise mit 4 bis 12 Atom% Zinn (ITO) oder mit 10 bis 70 Atom% Fluor dotiert ist, zugesetzt werden.

Besonders bevorzugt ist die Kombination mit Zinnoxid als weiterem IR-Absorber, welches mit 2 bis 60 Atom% Antimon (ATO) oder mit 10 bis 70 Atom% Fluor dotiert ist.

Ferner ist Zinkoxid besonders geeignet, das mit 1 bis 30 Atom%, vorzugsweise mit 2 bis 10 Atom% Aluminium oder mit 2 bis 30 Atom% Indium oder mit 2 bis 30 Atom% Gallium dotiert ist. Mischungen der oben genannten Infrarot-Absorbern sind besonders geeignet, da der Fachmann durch eine gezielte Auswahl eine Optimierung der Absorption im nahen Infrarotbereich, z.B. durch Verwendung von Absorbern mit verschiedenen Absorptionsmaxima, erreichen kann.
Die Polymer-Zusammensetzung enthält mindestens Ruß. Der Ruß liegt bevorzugt fein dispergiert in der organischen Polymermatrix vor und ist nanoskalig. Geeignete Ruße weisen eine durchschnittliche Teilchengröße auf von weniger als 100 Nanometer (nm), weiter bevorzugt weniger als 75 nm , noch weiter bevorzugt weniger als 50 nm und besonders bevorzugt weniger als 40 nm, wobei die durchschnittliche Teilchengröße vorzugsweise größer als 0,5 nm, weiter bevorzugt größer als 1 nm und besonders bevozugt größer als 5 nm ist.

Im Sinne der Erfindung geeignete Ruße unterscheiden sich von sogenannten Leitrußen dadurch, daß sie nur geringe oder keine elektrische Leitfähigkeit aufweisen. Leitruße weisen im Vergleich zu den hier verwendeten Rußen bestimmte Morphologien und Überstrukturen auf, um eine hohe Leitfähigkeit zu erzielen. Demgegenüber lassen sich die hier verwendeten nanoskaligen Ruße sehr gut in Thermoplasten dispergieren, so dass kaum zusammenhängende Bereiche aus Ruß auftreten, aus denen eine entsprechende Leitfähigkeit resultieren könnte. Kommerziell erhältliche und im Sinne der Erfindung geeignete Ruße sind unter einer Vielzahl von Handelsnamen und Formen, wie Pellets oder Pulver, erhältlich. So sind geeignete Ruße unter den Handelsnamen BLACK PEARLS®, als nass-verarbeitete Pellets unter den Namen ELFTEX®, REGAL® und CSX®, und in einer flockigen Erscheinungsform unter MONARCH®, ELFTEX®, REGAL® und MOGUL® - alle erhältlich von Cabot Corporation.

In einer besonders bevorzugten Ausführungsform weisen die Ruß-Typen Partikelgrößen von 10 - 30 nm auf und haben vorzugsweise eine Oberfläche von 35- 138 m² pro g (m²/g). Der Ruß kann behandelt oder unbehandelt sein - so kann der Ruß mit bestimmten Gasen, mit Silica oder organischen Substanzen, wie z.B. Butyllithium behandelt sein. Durch eine derartige Behandlung kann eine Modifizierung oder Funktionlisierung der Oberfläche erreicht werden. Dies kann die Kompatibiliät zur entsprechend eingesetzten Matrix fördern..Insbesondere bevorzugt sind Ruße, die unter dem Handelsnamen BLACK PEARLS® (CAS-Nr. 1333-86-4) gehandelt werden.

Der nanoskalige Ruß wird in der erfindungsgemäßen Zusammensetzung in Konzentrationen von 0,0005 Gew.-% - 0,0035 Gew.-%, insbesondere bevorzugt von 0,0009 Gew. % - 0,0030 Gew.-% und ganz besonders bevorzugt in Konzentrationen von 0,0010 Gew.-% bis 0,0028 Gew.-% eingesetzt

In einer bevorzugten Ausführungsform ist das Verhältnis von IR-Absorber zu Ruß 250 : 1 bis 2 : 1, bevorzugt 125 : 1 bis 4 : 1, weiter bevorzugt 25 : 1 bis 4 : 1, und besonders bevorzugt 15 : 1 bis 7:1.

Die vorliegend angegebenen Konzentrationen für Ruße und IR-Absorber finden vorzugsweise Anwendung für Fertigteile mit Dicken von 2 mm - 8 mm, bevorzugt 3,5 - 7,0 mm und besonders bevorzugt von 4 mm - 6 mm. Bei niedriger oder höherer Dicke müssen die Konzentrationen entsprechend nach oben bzw. unten angepasst werden, um beispielsweise eine zu starke Trübung oder eine zu geringe Wirkung zu vermeiden.

In einer besonderen Ausführungsform, bei der z.B. eine hohe Verwindungssteifigkeit erforderlich ist - z.B. bei Luft-/Schienenfahrzeugen - , können Dicken von 8-20 mm erforderlich sein. Die Konzentrationen der IR-Absorber und des anorganischen nanoskaligen Pigments müssen in diesem Fall entsprechend angepasst werden, d.h. die Konzentration nimmt mit zunehmender Schichtdicke ab.

In einer besonderen Ausführungsform enthält die Polymerzusammensetzung spezielle Phosphine zur Stabilisierung der Wolframate.

Phosphinverbindungen im Sinne der Erfindung sind sämtliche organische Derivate von Phosphorwasserstoff (Phosphin) und Salze hiervon. Hinsichtlich der Auswahl der Phosphine liegen keine Beschränkungen vor, wobei die Phosphinverbindungen bevorzugt aus der Gruppe ausgewählt sind, die aliphatische Phosphine, aromatische Phosphine und aliphatisch-aromatische Phosphine umfasst.

Die Phosphinverbindungen können primäre, sekundäre und tertiäre Phosphine sein. Bevorzugt werden tertiäre Phosphine eingesetzt, wobei aromatische Phosphine besonders bevorzugt und tertiäre aromatische Phosphine ganz besonders bevorzugt sind.

In einer bevorzugten Ausführungsform der Erfindung werden Triphenylphosphin (TPP), Trialkylphenylphosphin, Bisdiphenylphosphino-ethan oder ein Trinaphthylphosphin, wovon Triphenylphosphin ganz besonders bevorzugt ist, oder Mischungen dieser Phosphine eingesetzt.

Grundsätzlich können Mischungen aus verschiedenen Phosphinen eingesetzt werden.

In einer speziellen Ausführungsform der vorliegenden Erfindung werden die erfindungsgemäßen Phosphinverbindungen gemeinsam mit einem Phosphit oder einem phenolischen Antioxidans oder einer Mischung aus den beiden letztgenannten Verbindungen eingesetzt.

In einer weiteren besonderen Ausführungsform wird der erfindungemäße IR-Absorber vor der Einarbeitung in die thermoplastische Polymermatrix mit dem erfindungsgemäßen Phosphinstabilisator oder einer Mischung enthaltend eine erfindungsgemäße Phosphinverbindung gemeinsam mit einem Phosphit oder einem phenolischen Antioxidans oder einer Mischung aus den beiden letztgenannten Verbindungen vermischt.

Die Herstellung und Eigenschaften von Phosphinverbindungen sind dem Fachmann bekannt und beispielsweise in der EP-A 0718 354 und "Ullmanns Enzyklopädie der Technischen Chemie", 4. Aufl., Bd. 18, S. 378-398 und Kirk-Othmer, 3. Aufl., Bd. 17, S. 527-534 beschrieben.

Hinsichtlich der Menge der in der Polymer-Zusammensetzung enthaltenen Phosphinverbindungen liegen keine Beschränkungen vor. Vorzugsweise werden die Phosphine in einer Menge von 0,0001 Gew.-% bis 10,0000 Gew.-%, besonders bevorzugt von 0,01 Gew.-% bis 0,20 Gew.-%, bezogen auf die Masse der Polymer-Gesamtzusammensetzung, eingesetzt. In einer besonderen Ausführungsform der vorliegenden Erfindung werden die Phosphine in einer Menge von 0,05 Gew.-% bis 0,15 Gew.% bezogen auf die Masse der Polymer-Gesamtzusammensetzung, eingesetzt. Bei der Einsatzmenge der Phosphinverbindung ist zu berücksichtigen, dass unter bestimmten Verarbeitungsbedingungen in Abhängigkeit von Temperatur und Verweilzeit die Substanz oxidiert wird. Der oxidierte Anteil steht nicht mehr zur Stabilisierung des anorganischen IR-Absorber auf Wolframat-basis zur Verfügung. Deshalb ist die Zahl der Verarbeitungsschritte und die die jeweiligen Prozessbedingungen zu berücksichtigen. Bevorzugt liegt die Menge an nicht oxidierter Phosphinverbindung im Endprodukt bei >100 ppm, weiter bevorzugt bei > 200 ppm.

Um die thermoplastische Matrix zu stabilisieren, können weitere Phosphor-basierte Stabilisatoren eingesetzt werden, solange diese den Effekt der oben beschriebenen Stabilisierung nicht negativ beeinflussen.

Während Phosphine die IR-absorbierenden Wolframate offensichtlich stabilisieren, hat sich überraschenderweise herausgestellt, daß Phosphate, Phosphorsäure, Phosphorsäurederivate oder entsprechende Stabilisatoren, die diese Verbindungen beinhalten oder bilden können, zu einer schnelleren Zersetzung und somit zu einem Abfall der IR-Absorption führen.

Geeignete zusätzliche Stabilisatoren sind Phosphiten oder phenolischen Antioxidantien oder deren Mischungen, die ohne negative Auswirkungen auf die Beständigkeit der IR-Absorber in Verbindung mit den oben beschriebenen Phosphinen eingesetzt werden können. Kommerziell erhältliche geeignete Produkte sind beispielsweise Irgafos® 168 (Tris(2,4-di-tert-butyl-phenyl)-phosphit) und Irganox 1076® (2,6-Di-tert-butyl-4-(octadecanoxycarbonylethyl)phenol), jeweils einzeln oder in Kombination.

In einer bevorzugten Ausführungsform enthält die erfindungsgemäße Polymer-Zusammensetzung weiterhin einen Ultraviolett-Absorber. Zum Einsatz in der erfindungsgemäßen Polymer-Zusammensetzung geeignete Ultraviolett-Absorber sind Verbindungen, die eine möglichst geringe Transmission unterhalb 400 nm und eine möglichst hohe Transmission oberhalb von 400 nm besitzen. Derartige Verbindungen und deren Herstellung sind literaturbekannt und sind beispielsweise in den EP-A 0 839 623, WO-A 96/15102 und EP-A 0 500 496 beschrieben. Für den Einsatz in der erfindungsgemäßen Zusammensetzung besonders geeignete Ultraviolett-Absorber sind Benzotriazole, Triazine, Benzophenone und/oder arylierte Cyanoacrylate.

Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin^{®} 234, Ciba Spezialitätenchemie, Basel), 2-(2'-Hydroxy-5'-(tert.-octyl)-phenyl)-benzotriazol (Tinuvin^{®} 329, Ciba Spezialitätenchemie, Basel), 2-(2'-Hydroxy-3'-(2-butyl)-5'-(tert.butyl)-phenyl)-benzotriazol (Tinuvin^{®} 350, Ciba Spezialitätenchemie, Basel), Bis-(3-(2H-benztriazolyl)-2-hydroxy-5-tert.-octyl)methan, (Tinuvin^{®} 360, Ciba Spezialitätenchemie, Basel), (2-(4,6-diphenyl-1,3,5-triazin-2-yl)-5-(hexyloxy)-phenol (Tinuvin^{®} 1577, Ciba Spezialitätenchemie, Basel), sowie der Benzophenone 2,4-Dihydroxybenzophenon (Chimasorb^{®} 22 , Ciba Spezialitätenchemie, Basel) und 2-Hydroxy-4-(octyloxy)-benzophenon (Chimassorb^{®} 81, Ciba, Basel), 2-Propenoic acid, 2-cyano-3,3-diphenyl-, 2,2-bis[[(2-cyano-1-oxo-3,3-diphenyl-2-propenyl)oxy]-methyl]-1,3-propanediyl ester (9CI) (Uvinul^{®} 3030, BASF AG Ludwigshafen), 2-[2-hydroxy-4-(2-ethylhexyl)oxy]phenyl-4,6-di(4-phenyl)phenyl-1,3,5-triazine (CGX UVA 006, Ciba Spezialitätenchemie, Basel) oder Tetra-ethyl-2,2'-(1,4-phenylene-dimethylidene)-bismalonate (Hostavin^{®} B-Cap, Clariant AG)

Es können auch Mischungen dieser Ultraviolett-Absorber eingesetzt werden.

Hinsichtlich der Menge des in der Zusammensetzung enthaltenen Ultraviolett-Absorbers liegen keine besonderen Beschränkungen vor, solange die gewünschte Absorption von UV-Strahlung sowie eine ausreichende Transparenz des aus der Zusammensetzung hergestellten Formkörpers gewährleistet sind. Gemäß einer bevorzugten Ausführungsform der Erfindung enthält die Zusammensetzung Ultraviolett-Absorber in einer Menge von 0,05 Gew.-% bis 20,00 Gew.-%, insbesondere von 0,07 Gew.-% bis 10,00 Gew.-% und ganz besonders bevorzugt von 0,10 Gew.-% bis 1,00 Gew.-%.

In einer besonderen Ausführungsform der vorliegenden Erfindung ist die Polymerzusammensetzung frei von Phosphaten, Phosphorsäure, Phosphorsäurederivaten oder entsprechende Stabilisatoren, die diese Verbindungen beinhalten oder bilden können.

Die erfindungsgemäßen Zusammensetzungen enthalten neben dem anorganischen IR-Absorber und dem anorganischen nanoskaligen Pigment bevorzugt weitere Farbmittel zur Einstellung der Farbe (in Transmission).

Als zusätzliche Farbstoffe oder Pigmente können beispielsweise organische oder anorganische Pigmente oder organische Farbstoffe oder dergleichen eingesetzt werden. Als anorganische Pigmente können z.B. Schwefel-haltige Pigmente wie Cadmium Rot and Cadmium Gelb, Eisencyanid basierte Pigmente wie Berliner Blau, Oxid-Pigmente wie Titandioxid, Zinkoxid, rotes Eisenoxid, schwarzes Eisenoxid, Chromoxid, Titangelb, Zink-Eisen basiertes Braun, Titan-Cobalt basiertes Grün, Cobaltblau, Kupfer-chrom basiertes Schwarz und Kupfer-Eisen basiertes Schwarz oder Chrom-basierte Pigmente wie Chromgelb. Bevorzugte organische Pigmente oder Farbstoffe sind z.B. Phthalocyanin-abgeleitete Farbstoffe wie Kupfer-Phthalocyanin Blau and Kupfer Phthalocyanin Grün, kondensierte polycyclische Farbstoffe und Pigmente wie Azo-basierende (z.B. Nickel-Azogelb), Schwefel-Indigo-Farbstoffe, Perynon-basierte, Perylene-basierte, Chinacridonabgeleitete, Dioxazin-basierte, Isoindolinon-basierte und Chinophthalon-abgeleitete Derivate, Anthrachinon-basierte, heterocyclische Systeme usw. Von diesen sind Cyaninderivate, Chinolinderivate, Anthrachinonderivate, Phthalocyaninderivate bevorzugt. Konkrete Beispiele für Handelsprodukte wären z.B. MACROLEX Blau RR ®, MACROLEX Violett 3R®, MACROLEX Violett B® (Lanxess AG, Deutschland), Sumiplast Violett RR, Sumiplast Violett B, Sumiplast Blau OR, (Sumitomo Chemical Co., Ltd.), Diaresin Violett D, Diaresin Blau G, Diaresin Blau N (Mitsubishi Chemical Corporation), Heliogen Blau oder Heliogen Grün (BASF AG, Deutschland). Diese Farbstoffe können in Mengen von 0.00001 Gew.-%, bis 1,00000 Gew.-%, bevorzugt von 0.00010 Gew.-%, bis 0.10000 Gew.-%, und besonders bevorzugt von 0.00050 Gew.-%, bis 0.05000 Gew.-% eingesetzt werden.

Die Thermoplaste der erfindungsgemäßen Zusammensetzung können ferner übliche Entformungsmittel enthalten. Besonders geeignete Entformungsmittel sind z.B. Pentaerythrittetrastearat (PETS) oder Glycerinmonostearat (GMS).

Methoden zur Herstellung der erfindungsgemäßen Polymer-Zusammensetzungen sind dem Fachmann bekannt.

Die Herstellung der erfindungsgemäßen Polymer-Zusammensetzungen enthaltend einen Polycarbonat, einen anorganischen IR-Absorber aus der Gruppe der Wolframverbindungen, eine Phosphinverbindung und optional weitere übliche Polymeradditive erfolgt mit gängigen Einarbeitungsverfahren durch Zusammenführung, Vermischen und Homogenisieren der einzelnen Bestandteile, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen.

Es können auch Vormischungen verwendet werden, die aus Lösungen der Mischungskomponenten in geeigneten Lösungsmitteln, wobei gegebenenfalls in Lösung homogenisiert wird und das Lösungsmittel anschließend entfernt wird, hergestellt worden sind.

Insbesondere können hierbei die IR-Absorber, Phosphinverbindungen, Ultraviolett-Absorber und sonstigen Additive der erfindungsgemäßen Zusammensetzung durch bekannte Verfahren oder als Masterbatch eingebracht werden.

Die Verwendung von Masterbatchen ist insbesondere zum Einbringen des IR-Absorbers bevorzugt, wobei insbesondere Masterbatche auf Basis von Polycarbonat verwendet werden, in die die IR-Absorber in Form einer gebrauchsfertigen IR-Absorberformulierung enthaltend Dispergiermittel, vorzugsweise Polyacrylat-, Polyether- oder Polyester-basierte Dispergiermittel, hiervon vorzugsweise hochtemperaturstabile Dispergiermittel, wie einem Polyacrylat (Homo- oder Copolymer), wie z.B. Polymethylmethacrylat, und/oder Polyester oder deren Mischungen, weiterhin enthaltend Hilfsstoffe wie zum Beispiel Zirkoniumdioxid und ggf. Restlösemittel wie zum Beispiel Toluol, Benzol oder ähnliche aromatische Kohlenwasserstoffe eingetragen worden sind. Durch Verwendung dieser Masterbatche in Kombination mit den entsprechenden IR-Absorberformulierungen wird eine Agglomeration des IR-Absorbers in der Polymerzusammensetzung wirksam verhindert.

In diesem Zusammenhang kann die Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden.

In einer besonderen Ausführungsform wird der erfindungemäße IR-Absorber vor der Einarbeitung in die thermoplastische Polymermatrix und optional mit einem Phosphinstabilisator oder einer Mischung enthaltend eine eine Phosphinverbindung gemeinsam mit einem Phosphit und/oder einem phenolischen Antioxidans oder einer Mischung aus den beiden letztgenannten Verbindungen zu einem Masterbatch vermischt, wobei die Vermischung bevorzugt in der Schmelze unter Einwirkung von Scherkräften (zum Beispiel in einem Kneter oder Zweischneckenextruder) stattfindet. Dieses Verfahren bietet den Vorteil, daß der IR-Absorber auch schon während des Compoundierens geschützt und eine Schädigung desselben vermieden wird. Zur Herstellung de Masterbatches wird als Polymermatrix bevorzugt der thermoplastische Kunststoff gewählt, der auch die Hauptkomponente der letztlichen Polymer-Gesamtzusammensetzung darstellt.

Der so hergestellte Masterbatch enthält
a. 85,00 Gew.-% - 98,90 Gew.-%, bevorzugt 93,00 Gew.-% - 98,90 Gew.-% Polycarbonat;
b. 0,10 Gew.% - 2,00 Gew.-% Wolframat als anorganischen IR-Absorber, vorzugsweise Cs_{0,33}WO₃ oder Zink-dotiertes Wolframat; und
c. 1,00 Gew.-% - 4,80 Gew.-% Dispergiermittel;
d. optional 0,00 Gew.-%- 0,20 Gew.-%, bevorzugt 0,01 Gew.-% - 0,10 Gew.-%, mindestens eines Stabilisators ausgewählt aus der Gruppe, die Phosphine, Phosphite und phenolische Antioxidantien sowie Mischungen dieser Stabilisatoren umfaßt;
e. optional 0,001 Gew.-% - 0,200 Gew.-% Ruß,
f. optional 0,00 Gew.-% - 8,00 Gew.-% mindestens eines weiteren Hilfsstoffs und/oder Additivs, wie z. B. Zirkondioxid;
wobei sich die Summe der Komponenten a-f zu 100 Gew.-% addiert.

In einer bevorzugten Ausführungsform liegt der anorganische IR-Absorber in einer Acrylat- Matrix vor.

Eine weitere bevorzugte Ausführungsform sieht Triphenylphosphin (TPP) als Stabilisator vor.

Die erfindungsgemäßen Polymer-Zusammensetzungen können zu Erzeugnissen oder Formkörpern verarbeitet werden, in dem man beispielsweise die Polymer-Zusammensetzungen zunächst wie beschrieben zu Granulat extrudiert und dieses Granulat durch geeignete Verfahren zu verschiedenen Erzeugnissen oder Formkörpern in bekannter Weise verarbeitet.

Die erfindungsgemäßen Zusammensetzungen können in diesem Zusammenhang beispielsweise durch Heißpressen, Spinnen, Blasformen, Tiefziehen, Extrudieren oder Spritzgiessen in Erzeugnisse oder Formkörper, geformte Gegenstände wie Spielzeugteile, Fasern, Folien, Bändchen, Platten wie Massivplatten, Stegplatten, Doppelstegplatten oder Wellplatten, Gefäße, Rohre oder sonstige Profile, überführt werden. Von Interesse ist auch die Verwendung von Mehrschichtsystemen. Das Aufbringen kann zugleich oder unmittelbar nach der Formgebung des Grundkörpers geschehen, z.B. durch Coextrusion oder Mehrkomponentenspritzguss. Das Aufbringen kann aber auch auf den fertig geformten Grundkörper geschehen, z.B. durch Lamination mit einem Film oder durch Beschichtung mit einer Lösung.

Platten aus Basis- und optionaler Deckschicht / optionalen Deckschichten werden jedoch bevorzugt durch (Co)extrusion hergestellt.

Zur Extrusion wird die gegebenenfalls z.B. mittels Trocknung vorbehandelte Polymer-Zusammensetzung dem Extruder zugeführt und im Plastifizierungssystem des Extruders aufgeschmolzen. Die Kunststoffschmelze wird dann durch eine Breitschlitzdüse oder eine Stegplattendüse gedrückt und dabei verformt, im Walzenspalt eines Glättkalanders in die gewünschte endgültige Form gebracht und durch wechselseitige Kühlung auf Glättwalzen und der Umgebungsluft formfixiert. Es werden die zur Extrusion der Polymer-Zusammensetzung notwendigen Temperaturen eingestellt, wobei üblicherweise den Herstellerangaben gefolgt werden kann. Enthalten die Polymerzusammensetzungen beispielsweise Polycarbonate mit hoher Schmelzeviskosität, so werden diese normalerweise bei Schmelzetemperaturen von 260 °C bis 350 °C verarbeitet, entsprechend werden die Zylindertemperaturen des Plastifizierzylinders sowie die Düsentemperaturen eingestellt.

Durch Einsatz von einem oder mehreren Seitenextrudern und einer Mehrkanal-Düse oder gegebenenfalls geeigneten Schmelzeadaptern vor einer Breitschlitzdüse lassen sich thermoplastische Schmelzen verschiedener Zusammensetzung übereinander legen und somit mehrschichtige Platten oder Folien erzeugen (für die Coextrusion siehe beispielsweise EP-A 0 110 221, EP-A 0 110 23 und EP-A 0 716 919, für Details des Adapter- und Düsenverfahrens siehe Johannaber/Ast:"Kunststoff Maschinenführer", Hanser Verlag, 2000 und in Gesellschaft Kunststofftechnik: "Coextrudierte Folien und Platten: Zukunftsperspektiven, Anforderungen, Anlagen und Herstellung, Qualitätssicherung", VDI-Verlag, 1990).

Erfindungsgemäß bevorzugte Erzeugnisse oder Formkörper sind Platten, Folien, Verscheibungen, beispielsweise Autofenster, Fenster von Schienen- und Luftfahrzeugen, Autosonnendächer, Bedachungen oder Gebäudeverglasungen, die die erfindungsgemäßen Zusammensetzungen enthalten. Dabei können neben Massivplatten auch Doppelstegplatten oder Multistegplatten verwendet werden. Als weitere Komponenten der erfindungsgemäßen Erzeugnisse können neben den erfindungsgemäßen Zusammensetzungen beispielsweise weitere Werkstoffteile in den erfindungsgemäßen Erzeugnissen enthalten sein. Beispielsweise können Verscheibungen Dichtungsmaterialen am Rand der Verscheibungen aufweisen. Bedachungen können beispielsweise Metallkomponenten wie Schrauben, Metallstifte oder ähnliches aufweisen, die zur Befestigung oder Führung (bei Falt- oder Schiebedächern) der Bedachungselemente dienen können. Ferner können weitere Materialien mit den erfindungsgemäßen Zusammensetzungen verbunden werden, z.B. im 2-Komponenten-Spritzguss. So kann das entsprechende Bauteil mit IR-absorbierenden Eigenschaften mit einem Rand versehen werden, welcher z.B. dem Verkleben dient.

Die Artikel aus der Zusammensetzung der vorliegenden Erfindung haben Trübungswerte von weniger als 3 %, bevorzugt weniger als 2,5 %, weiter bevorzugt weniger als 2,0 % und besonders bevorzugt weniger als 1,5 %, eine Transmission von mindestens 10 %. und einen T_{DS} Wert von bevorzugt <70 % (T_{DS} : Direct Solar Transmittance; Werte gelten bei 4 mm optische Farbmusterplatte. Die Berechnung der Gesamttransmission T_{DS} wird allgemein nach ISO 13837, computational convention "A" durchgeführt).

In einer besonderen Ausführungsform werden die Artikel aus der Zusammensetzung der vorliegenden Erfindung beschichtet. Diese Beschichtung dient dem Schutz des thermoplastischen Materials gegenüber allgemeinen Witterungseinflüssen (z.B. Schädigung durch Sonnenlicht) sowie gegenüber mechanischer Beeinträchtigung der Oberfläche (z.B. Verkratzen) und erhöht somit die Beständigkeit der entsprechend ausgerüsteten Artikel.

Es ist bekannt, dass Polycarbonat gegenüber UV-Strahlung mittels verschiedener Beschichtungen geschützt werden kann. Üblicherweise enthalten diese Beschichtungen UV-Absorber. Diese Schichten erhöhen ebenso die Kratzfestigkeit des entsprechenden Artikels. Die Artikel aus der vorliegenden Erfindung können Einschicht oder Mehrschichtsysteme tragen. Sie können ein- oder beidseitig beschichtet sein. In einer bevorzugten Ausführungsform enthält der Artikel einen Kratzfestlack enthaltend UV-Absorber. In einer besonderen Ausführungsorm enthält das Mehrschichterzeugnis mindestens eine Schicht enthaltend die erfindungsgemäße Zusammensetzung , mindestens eine UV-Schutzschicht und optional eine Kratzfestbeschichtung.

Bei Verscheibungsmaterialien trägt der Artikel mindestens eine Kratzfest- bzw. Antireflexbeschichtung auf mindestens einer Seite.

Die Herstellung der Beschichtung, z.B. einer Anti-Reflexbeschichtung, kann über verschiedene Methoden erfolgen. Beispielsweise kann über verschiedene Methoden des Aufdampfens, z.B. über Elektronenstrahlverfahren, Widerstandserhitzung sowie über Plasmaabscheidung oder verschiedener Sputtermethoden wie Hochfrequenz-Sputtern, Magnetron-Sputtern, Ionenstrahl-Sputtern usw., Ionenplattieren mittels DC-, RF-, HCD-Methoden, Reaktiv-Ionenplattieren usw. oder chemischer Gasphasenabscheidung eine Beschichtung erfolgen. Ferner kann eine Antireflexbeschichtung auch aus Lösung aufgebracht werden. So kann über eine Dispersion eines Metalloxids mit hohen Brechungsindex wie ZrO₂, TiO₂ Sb₂O₅ oder WO₃ in einen Silicon-basierten Lack eine entsprechende Beschichtungslösung hergestellt werden, welche zur Beschichtung von Kunstoffartikeln geeignet ist und thermisch oder UV-gestützt ausgehärtet werden kann.

Es sind verschiedene Methoden bekannt, um eine Kratzfestbeschichtung auf Kunststoffartikeln herzustellen. Beispielsweise können Epoxy-, Acryl-, Polysiloxan-, kolloidales Kieselgel-, oder anorganisch/organisch (Hybridsysteme) basierte Lacke verwendet werden. Diese Systeme können über beispielsweise über Tauchverfahren, Spincoating, Sprühverfahren, oder Fließbeschichtung aufgebracht werden. Die Aushärtung kann thermisch oder mittels UV-Bestrahlung erfolgen. Es können Ein- oder Mehrschichtsysteme verwendet werden. Die Kratzfestbeschichtung kann z.B. direkt oder nach Vorbereitung der Substratoberfläche mit einer Grundierung (Primer) aufgetragen werden. Ferner kann eine Kratzfestbeschichtung über Plasma-gestützte Polymerisationsverfahren aufgebracht werden, z.B. über ein SiO₂-Plasma. Antibeschlags- oder Antireflex-Beschichtungen können ebenfalls über Plasmaverfahren hergestellt werden. Weiterhin ist es möglich, über bestimmte Spritzgussverfahren, wie z.B. das Hinterspritzen von oberflächenbehandelten Folien, eine Kratzfestbeschichtung auf den resultierenden Formkörper aufzubringen. In der Kratzfestschicht können verschiedene Additive, wie z.B. UV-Absorber, abgeleitet z.B. von Triazolen oder Triazinen, vorhanden sein. Ferner können IR-Absorber organischer oder anorganischer Natur enthalten sein. Diese Additive können im Kratzfestlack selbst oder in der Primerschicht enthalten sein. Die Dicke der Kratzfestschicht beträgt 1 - 20 µm, bevorzugt 2 - 15 µm .Unterhalb von 1 µm ist die Beständigkeit der Kratzfestschicht ungenügend. Oberhalb von 20 µm treten häufiger Risse im Lack auf. Das erfindungsgemäße Basismaterial, welches in der vorliegenden Erfindung beschrieben wird, wird bevorzugt nach Fertigstellung des Spritzgussartikels mit einer oben beschriebenen Kratzfest- und/oder Antireflexschicht versehen, da der bevorzugte Einsatzbereich im Bereich von Fenster- oder- Automobilverscheibung liegt.

Für Polycarbonate wird bevorzugt ein UV-Absorber enthaltener Primer eingesetzt, um die Haftung des Kratzfestlackes zu verbessern. Der Primer kann weitere Stabilisatoren wie z.B. HALS-Systeme (Stabilisatoren auf Basis sterisch gehinderter Amine), Haftvermittler, Fließhilfsmittel enthalten. Das jeweilige Harz kann aus einer Vielzahl von Materialien ausgewählt werden und ist z.B. in Ullmann's Encylopedia of Industrial Chemistry, 5th Edition, Vol. A18, pp. 368-426, VCH, Weinheim 1991 beschrieben. Es können Polyacrylate, Polyurethane, Phenol-basierte, Melaminbasierte, Epoxy- und Alkyd-Systeme oder Mischungen dieser Systeme eingesetzt werden. Das Harz wird meist in geeigneten Lösemitteln gelöst - häufig in Alkoholen. Abhängig vom gewählten Harz kann die Aushärtung bei Raumtemperatur oder bei erhöhten Temperaturen erfolgen. Bevorzugt werden Temperaturen zwischen 50 °C und 130 °C eingesetzt - häufig nach dem ein Großteil des Lösemittels kurzzeitig bei Raumtemperatur entfernt wurde. Kommerziell erhältliche Systeme sind z.B. SHP470, SHP470FT2050 und SHP401 der Firma Momentive Performance Materials. Derartige Beschichtungen sind z.B. in US 6350512 B1, US 5869185, EP 1308084, WO 2006/108520 beschrieben.

Kratzfest-Lacke (Hard-Coat) sind bevorzugt aus Siloxanen aufgebaut und enthalten bevorzugt UV-Absorber. Sie werden bevorzugt über Tauch- oder Fließverfahren aufgebracht. Die Aushärtung erfolgt bei Temperaturen von 50 °C - 130 °C. Kommerziell erhältliche Systeme sind z.B. AS4000, SHC5020 und AS4700 von Momentive Performance Materials. Derartige Systeme sind z.B. in US 5041313, DE 3121385, US 5391795, WO 2008/109072 beschrieben. Die Synthese dieser Materialien erfolgt meist über Kondensation von Alkoxy- und/oder Alkylakoxysilanen unter Säure- oder Basenkatalyse. Optional können Nanopartikel eingearbeitet werden. Bevorzugte Lösemittel sind Alkohole wie Butanol, Isopropanol, Methanol, Ethanol und deren Mischungen.

Anstatt von Primer / Kratzfestbeschichtungs-Kombinationen können Einkomponenten-Hybrid-Systeme eingesetzt werden Diese sind z.B. in EP0570165 oder WO 2008/071363 oder DE 2804283 beschrieben. Kommerziell erhältlich Hybrid-Systeme sind z.B. unter den Namen PHC587 oder UVHC 3000 von Momentive Performance Materials erhältlich.

### Beispiele

Im Folgenden wird die Erfindung anhand von Ausführungsbeispielen näher beschrieben, wobei die hier beschriebenen Bestimmungsmethoden für alle korrespondierenden Größen in der vorliegenden Erfindung zur Anwendung kommen, sofern nichts Gegenteiliges beschrieben worden ist.

Die Bestimmung des Schmelzvolumenrate (MVR) erfolgt nach ISO 1133 (bei 300 °C; 1,2 kg).

### Messung des Streueffektes:

Die Messung der Farbe erfolgt in Reflexion und wird wie folgt durchgeführt:
Der Prüfkörper wird unter 60° Einfallswinkel gegenüber der Vertikalen mit einer weißen Punktlichtquelle beleuchtet und unter 30° bis -80° Ausfallswinkel gegenüber der Vertikalen wird die Streuung gemessen und die CIELAB Farbkoordinaten L*, a*, b* mit Lichtart D65 und 10°-Beobachter (Vgl. FIG.1) nach ASTM E 308 berechnet. Dieses Farbsystem ist z.B. in Manfred Richter: Einführung in die Farbmetrik. 1984 ISBN 3-11-008209-8 beschrieben. Für die Evaluation der Farbe wird der b* Wert bei 10°-Beobachter verwendet (im weiteren b* (60°) genannt).

Die Messungen wurden mit einem Goniophotometer "Gon360-105" (Gon360 mit Simultanspektrometer CAS 140) der Firma Instrument Systems durchgeführt.

### Hemisphärische Reflexion (b* hemisphärisch)

Die hemisphärische Reflexion des Prüfkörpers nach ASTM E 1331 gemessen und die CIELAB Farbkoordinaten L*, a*, b* mit Lichtart D65 und 10°-Beobachter nach ASTM E 308 berechnet. In der Tabelle ist der entsprechende b*(hemisphärisch)-Wert angegeben.

### Δb*: Absolutwert des Unterschieds von b* (60°) und b* (hemisphärisch).

### Bestimmung des T_{DS}-Wertes (Direct Solar Transmittance):

Die Transmissions- und Reflexionsmessungen wurden an einem Perkin Elmer Lambda 900 Spektralphotometer mit Photometerkugel durchgeführt (d.h. Bestimmung der Gesamttransmission sowohl durch Messung der diffusen und direkten Transmission als auch der diffusen und direkten Reflektion). Alle Werte wurden von 320 nm bis 2300 nm bestimmt.

Die Berechnung der Gesamttransmission T_{DS} wurde nach ISO 13837, computational convention "A" durchgeführt.

### Visuelle Lichtttransmission/Trübung:

Die Transmissionsmessungen wurden an einem Perkin Elmer Lambda 900 Spektralphotometer mit Photometerkugel durchgeführt (d.h. Bestimmung der Gesamttransmission sowohl durch Messung der diffusen und direkten Transmission als auch der diffusen und direkten Reflektion).gemäß ASTMD1003.

### Materialien:

Zur Herstellung der Probekörper wird additivfreies Polycarbonat Makrolon 2608 (lineares Bisphenol-A Polycarbonat) der Firma Bayer MaterialScience mit einem Schmelzvolumenindex (MVR) von 12 cm³/10 min bei 300 °C und 1,2 kg Belastung gemäß ISO 1133 verwendet.

Als IR-Absorber wird Cäsiumwolframat, Cs_{0,33}WO₃, (YMDS 874 der Firma Sumitomo Metal Mining, Japan) eingesetzt. Das Produkt liegt in Form einer Acrylat-Dispersion vor. Die Gewichtsangaben in den Beispielen beziehen sich auf das Cäsiumwolframat als Reinstoff, wobei der Feststoffgehalt an Cäsiumwolframat in der eingesetzten kommerziellen Dispersion 25 Gew.-% beträgt.

Als nanoskaliger Ruß (Partikelgröße ca. 17 nm) werden Black Pearls® 800 der Firma Cabot Corp. eingesetzt.

### Compoundierung:

Die Compoundierung der Additive erfolgte auf einem Zweiwellenextruder der Firma KrausMaffei Berstorff TYP ZE25 bei einer Gehäusetemperatur von 260°C bzw. einer Massetemperatur von 270°C und einer Drehzahl von 100 Upm mit der in Tabelle 1 angegebenen Mengen an Additiven.

### Prüfkörper:

Das Granulat wird bei 120 °C für 3 Stunden im Vakuum getrocknet und anschließend auf einer Spritzgussmaschine vom Typ Arburg 370 mit einer 25-Spritzeinheit bei einer Massetemperatur von 300°C und einer Werkzeugtemperatur von 90 °C zu Farbmusterplatten mit den Abmessungen 60 mm x 40 mm x 4 mm) verarbeitet.

### Beispiel 1 (Vergleichsbeispiel)

Makroion® 2608 ohne weitere Zusätze wie oben beschrieben compoundiert. Die Ergebnisse der optischen Messungen sind in Tabelle 1 aufgeführt.

### Beispiel 2 (Vergleichsbeispiel)

Makrolon^{®} 2608 wird mit 0,0013 Gew.-% Cäsiumwolframat, Cs_{0,33}WO₃, (entspricht 0,005 Gew.-% YMDS 874-Dispersion) wie oben beschrieben compoundiert. Die Ergebnisse der optischen Messungen sind in Tabelle 1 aufgeführt.

### Beispiel 3 (Vergleichsbeispiel)

Makrolon^{®} 2608 wird mit 0,0025 Gew.-% Cäsiumwolframat, Cs_{0,33}WO₃, (entspricht 0,01 Gew.-% YMDS 874-Dispersion) wie oben beschrieben compoundiert. Die Ergebnisse der optischen Messungen sind in Tabelle 1 aufgeführt.

### Beispiel 4 (Vergleichsbeispiel)

Makrolon^{®} 2608 wird mit 0,005 Gew.-% Cäsiumwolframat, Cs_{0,33}WO₃, (entspricht 0,02 Gew.-% YMDS 874-Dispersion) wie oben beschrieben compoundiert. Die Ergebnisse optischen Messungen sind in Tabelle 1 aufgeführt.

### Beispiel 5 (Vergleichsbeispiel)

Makrolon^{®} 2608 wird mit 0,005 Gew.-% Cäsiumwolframat, Cs_{0,33}WO₃, (entspricht 0,02 Gew.-% YMDS 874-Dispersion) und 0,0003 Gew.-% Black Pearls 800 wie oben beschrieben compoundiert. Die Ergebnisse der optischen Messungen sind in Tabelle 1 aufgeführt.

### Beispiel 6 (Vergleichsbeispiel)

Makrolon^{®} 2608 wird mit 0,0075 Gew.-% Cäsiumwolframat, Cs_{0,33}WO₃, (entspricht 0,04 Gew.-% YMDS 874-Dispersion) wie oben beschrieben compoundiert. Die Ergebnisse der optischen Messungen sind in Tabelle 1 aufgeführt.

### Beispiel 7 (Vergleichsbeispiel)

Makrolon^{®} 2608 wird mit 0,01 Gew.-% Cäsiumwolframat, Cs_{0,33}WO₃, (entspricht 0,03 Gew.-% YMDS 874-Dispersion) wie oben beschrieben compoundiert. Die Ergebnisse der optischen Messungen sind in Tabelle 1 aufgeführt.

### Beispiel 8 (Vergleichsbeispiel)

Makrolon^{®} 2608 wird mit 0,0125 Gew.-% Cäsiumwolframat, Cs_{0,33}WO₃, (entspricht 0,05 Gew.-% YMDS 874-Dispersion) wie oben beschrieben compoundiert. Die Ergebnisse der optischen Messungen sind in Tabelle 1 aufgeführt.

### Beispiel 9 (Vergleichsbeispiel)

Makrolon^{®} 2608 wird mit 0,025 Gew.-% Cäsiumwolframat, Cs_{0,33}WO₃, (entspricht 0,1 Gew.-% YMDS 874-Dispersion) wie oben beschrieben compoundiert. Die Ergebnisse der optischen Messungen sind in Tabelle 1 aufgeführt.

### Beispiel 10 (Vergleichsbeispiel)

Makrolon^{®} 2608 wird mit 0,0125 Gew.-% Cäsiumwolframat, Cs_{0,33}WO₃, (entspricht 0,05 Gew.-% YMDS 874-Dispersion) und 0,0003 Gew.-% Black Pearls 800 wie oben beschrieben compoundiert. Die Ergebnisse der optischen Messungen sind in Tabelle 1 aufgeführt.

### Beispiel 11 (Erfindungsgemäß)

Makrolon^{®} 2608 wird mit 0,0125 Gew.-% Cäsiumwolframat, Cs_{0,33}WO₃, (entspricht 0,05 Gew.-% YMDS 874-Dispersion) und 0,001 Gew.-% Black Pearls 800 wie oben beschrieben compoundiert. Die Ergebnisse der optischen Messungen sind in Tabelle 1 aufgeführt.

### Beispiel 12 (Erfindungsgemäß)

Makrolon^{®} 2608 wird mit 0,025 Gew.-% Cäsiumwolframat, Cs_{0,33}WO₃, (entspricht 0,1 Gew.-% YMDS 874-Dispersion) und 0,003 Gew.-% Black Pearls 800 wie oben beschrieben compoundiert. Die Ergebnisse der optischen Messungen sind in Tabelle 1 aufgeführt.

**Tabelle 1: Veränderung des Streueffektes durch verschiedene IR-Absorber / Ruß-Kombinationen**

| Beispiel Nr. | Cs_{0,33}WO₃ Feststoffgehalt [Gew.-%] | Ruß [Gew.-%] | b* (60°) | b* (hemisphärisch) | Δb* | Lichttransmission [%] | Trübung [%] | T_{DS} [%] |
|---|---|---|---|---|---|---|---|---|
| 1 Vergleich | 0 | 0 | -0,4 | -0,9 | 0,5 | 89,2 | 0,4 | 82,9 |
| 2 Vergleich | 0,0013 | 0 | -1,2 | -0,8 | 0,4 | 88,5 | 0,8 | 79,9 |
| 3 Vergleich | 0,0025 | 0 | -1,6 | -1,0 | 0,6 | 87,8 | 0,7 | 76,5 |
| 4 Vergleich | 0,0050 | 0 | -2,5 | -1,2 | 1,3 | 86,2 | 0,9 | 75,9 |
| 5 Vergleich | 0,0050 | 0,0003 | -2,3 | -0,5 | 1,8 | 73,4 | 1,0 | 60,9 |
| 6 Vergleich | 0,0075 | 0 | -3,0 | -1,6 | 1,4 | 84,7 | 0,5 | 64,4 |
| 7 Vergleich | 0,0100 | 0 | -4,0 | -1,8 | 2,2 | 83,1 | 0,5 | 59,5 |
| 8 Vergleich | 0,0125 | 0 | -5,7 | -1,9 | 3,8 | 81,2 | 1,0 | 56,2 |
| 9 Vergleich | 0,0250 | 0 | -9,6 | -3,2 | 6,4 | 73,7 | 1,4 | 42,7 |
| 10 Vergleich | 0,0125 | 0,0003 | -3,5 | -1,2 | 2,3 | 69,2 | 0,5 | 49,1 |
| 11 Erfindungsgemäß | 0,0125 | 0,0010 | -1,1 | -0,6 | 0,5 | 48,1 | 0,7 | 41,9 |
| 12 Erfindungsgemäß | 0,0250 | 0,0030 | -2,0 | -1,6 | 0,4 | 14,4 | 1,2 | 10,2 |

Die erfindungsgemäßen Beispiele zeigen, dass sich durch Zusatz von spezifischen Mengen an nanoskaligem Ruß der b*(60°)-Wert und damit das Ausmaß des unerwünschten Streueffektes reduzieren lässt.

Die Beispiele 2 und 3 (Vergleichsbeispiele) zeigen, dass bei geringen Einsatzmengen an anorganischem IR-Absorber, der b* (60°)-Wert sich noch nicht deutlich verändert. Darüber hinaus weisen die Zusammensetzungen dieser Beispiele nur einen ungenügenden IR-Schutz (T_{DS}-Wert zu hoch) auf.

Die Vergleichsbeispiele 5 und 10 zeigen, dass bestimmte, geringe Mengen an nanoskaligem Ruß den Streueffekt nicht ausreichend begrenzen, d.h. der b*60°-und/oder der Δb*-Wert können durch den Zusatz des nanoskaligen Pigments nicht in den gewünschten Bereich hinein verändert werden. Allerdings erkennt man, dass bei Vergleichsbeispiel 10 im Gegensatz zu Beispiel 5 der b*(60°)-Wert deutlich stärker erhöht, d.h. in Richtung 0 verschoben, wird, obwohl die gleiche Konzentration an nanoskaligem Pigment verwendet wurde. Auch wenn die Veränderung des b*(60°)-Werts in Beispiel 10 nicht ausreicht, zeigen diese Beispiele, dass die Veränderung des Streueffekts durch das nanoskalige Pigment nicht in naheliegender Weise sondern vielmehr überraschend erfolgt.

Die erfindungsgemäßen Beispiele 11 und 12 zeigen, dass sich der Streueffekt gegenüber den Vergleichsbeispielen 8 und 9, in welchen vergleichbare Mengen an Wolframat verwendet wurde, signifikant reduzieren lässt. Ferner ist der Unterschied des durch den Streueffekt hervorgerufenen bläulichen Schimmers und der reflektierten Eigenfarbe nicht mehr erkennbar (Δb* ist kleiner als 1).

## Patentansprüche

1. Polymer-Zusammensetzung enthaltend
a. Polycarbonat;
b. mindestens einen anorganischen IR-Absorber aus der Gruppe der Wolframate mit einem Partikeldurchmesser von kleiner als 200 nm und größer als 5 nm in einem Anteil von 0,0075 Gew.-% - 0,0750 Gew.%, berechnet als Feststoffanteil an Wolframat in der Polymergesamtzusammensetzung; und
c. mindestens ein anorganisches, nanoskaliges Pigment in einem Anteil von 0,0005 Gew.% - 0,0035 Gew.-% bezogen auf die Gesamtzusammensetzung, wobei das anorganische, nanoskalige Pigment Ruß mit einer mittleren Teilchengröße < 100 nm ist; und
d. optional weitere Additive

2. Zusammensetzung nach Anspruch 1, **dadurch gekennzeichnet, dass** das Verhältnis von b) zu c) 250 : 1 bis 2 : 1 beträgt.

3. Zusammensetzung nach Anspruch 1, **dadurch gekennzeichnet, dass** das Verhältnis von b) zu c) 15 : 1 bis 7 : 1 beträgt.

4. Zusammensetzung nach Anspruch 1, **dadurch gekennzeichnet, dass** der Infrarotabsorber ausgewählt ist aus der Gruppe, die Wolframverbindungen vom Typ umfasst
b1) WyOz mit W = Wolfram, O = Sauerstoff; und z/y = 2,20 - 2,99; und/oder
b2) MxWyOz mit M = H, He, Alkali metall, Erdalkalimetall, Metall aus der Gruppe der Seltenen Erden, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi; x/y = 0,001-1,000; und z/y = 2,2-3,0, sowie deren Gemische; und/oder
b3) Zn_{w}MxWyOz mit M = mindestens ein Element ausgewählt aus der Gruppe bestehend aus H, He, Alkalimetall, Erdalkalimetall, Metall aus der Gruppe der Seltenen Erden, Mg, Zr, Cr, Mn, Fe, Ru, Co, Rh, Ir, Ni, Pd, Pt, Cu, Ag, Au, Cd, Al, Ga, In, Tl, Si, Ge, Sn, Pb, Sb, B, F, P, S, Se, Br, Te, Ti, Nb, V, Mo, Ta, Re, Be, Hf, Os, Bi; x/y = 0,001-1,000; z/y = 2,2-3,0; und w = 0,001 - 0,015, sowie deren Gemische.

5. Zusammensetzung nach Anspruch 1, **dadurch gekennzeichnet, dass** die Zusammensetzung zusätzlich Triphenylphosphin als Stabilisator zur Stabilisierung des IR-Absorbers enthält.

6. Zusammensetzung nach Anspruch 1, **dadurch gekennzeichnet, dass** als Stabilisator zur Stabilisierung des IR-Absorbers eine Mischung aus Phosphin, Phosphit und phenolischem Antioxidans eingesetzt wird.

7. Zusammensetzung nach Anspruch 1, **dadurch gekennzeichnet, dass** der Ruß eine Oberfläche von 35 - 138 m²/g aufweist.

8. Zusammensetzung nach Anspruch 1, **dadurch gekennzeichnet, dass** Komponente d) ausgewählt ist aus der Gruppe, die Ultraviolett-Absorber, Farbmittel, Entformer, Flammschutzmittel und Thermostabilisatoren enthält.

9. Zusammensetzung nach Anspruch 1 mit einem b* (60°) Wert von -2,5 bis 0,0.

10. Verwendung eines Rußes mit einer mittleren Teilchengröße < 100 nm zur Verminderung von Streuungen hervorgerufen durch nanoskalige Wolframate mit einem Partikeldurchmesser von kleiner als 200 nm und größer als 5 nm in einer Polycarbonat-Zusammensetzung.

11. Verwendung einer Polymer-Zusammensetzung nach Anspruch 1 zur Herstellung von Automobil-, Schienenfahrzeug-, Luftfahrzeug- und Architekturverscheibungen.

12. Mehrschichterzeugnis enthaltend
- mindestens eine Schicht hergestellt aus einer Zusammensetzung nach Anspruch 1,
- mindestens eine UV-Schutzschicht, und
- optional eine Kratzfestbeschichtung.

## Claims

1. Polymer composition containing
a. polycarbonate;
b. at least one inorganic IR absorber from the group of the tungstates having a particle diameter of less than 200 nm and greater than 5 nm in an amount of from 0.0075 wt.% to 0.0750 wt.%, calculated as solids content of tungstate in the total polymer composition; and
c. at least one inorganic, nano-scale pigment in an amount of from 0.0005 wt.% to 0.0035 wt.%, based on the total composition, wherein the inorganic, nano-scale pigment is carbon black having a mean particle size of < 100 nm; and
d. optionally further additives.

2. Composition according to claim 1, **characterised in that** the ratio of b) to c) is from 250: 1 to 2:1.

3. Composition according to claim 1, **characterised in that** the ratio of b) to c) is from 15:1 to 7:1.

4. Composition according to claim 1, **characterised in that** the infrared absorber is selected from the group comprising tungsten compounds of the following types:
b1) WyOz where W = tungsten, O = oxygen; and z/y = 2.20 - 2.99; and/or
b2) MxWyOz where M = H, He, alkali metal, alkaline earth metal, metal from the group of the rare earths, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi; x/y = 0.001-1.000; and z/y = 2.2-3.0, and mixtures thereof; and/or
b3) Zn_{w}MxWyOz where M = at least one element selected from the group consisting of H, He, alkali metal, alkaline earth metal, metal from the group of the rare earths, Mg, Zr, Cr, Mn, Fe, Ru, Co, Rh, Ir, Ni, Pd, Pt, Cu, Ag, Au, Cd, Al, Ga, In, Tl, Si, Ge, Sn, Pb, Sb, B, F, P, S, Se, Br, Te, Ti, Nb, V, Mo, Ta, Re, Be, Hf, Os, Bi; x/y = 0.001-1.000; z/y = 2.2-3.0; and w = 0.001 - 0.015, and mixtures thereof.

5. Composition according to claim 1, **characterised in that** the composition additionally contains triphenylphosphine as stabiliser for stabilising the IR absorber.

6. Composition according to claim 1, **characterised in that** a mixture of phosphine, phosphite and phenolic antioxidant is used as stabiliser for stabilising the IR absorber.

7. Composition according to claim 1, **characterised in that** the carbon black has a surface area of from 35 to 138 m²/g_{.}

8. Composition according to claim 1, **characterised in that** component d) is selected from the group containing ultraviolet absorbers, colouring agents, demoulding agents, flameproofing agents and heat stabilisers.

9. Composition according to claim 1 having a b* (60°) value of from -2.5 to 0.0.

10. Use of a carbon black having a mean particle size of < 100 nm to reduce scattering caused by nano-scale tungstates having a particle diameter of less than 200 nm and greater than 5 nm in a polycarbonate composition.

11. Use of a polymer composition according to claim 1 for the production of automotive, railway vehicle, aircraft and architectural glazing.

12. Multilayer product containing
- at least one layer produced from a composition according to claim 1,
- at least one anti-UV layer, and
- optionally a scratch-resistant coating.

## Revendications

1. Composition de polymère contenant
a. du polycarbonate ;
b. au moins un absorbeur IR inorganique choisi dans le groupe des tungsténates ayant un diamètre de particule inférieur à 200 nm et supérieur à 5 nm en une proportion de 0,0075 % en poids - 0, 0750 % en poids, calculée en tant que fraction solide de tungsténate dans la composition totale de polymère ; et
c. au moins un pigment inorganique nanométrique en une proportion de 0,0005 % en poids - 0,0035 % en poids par rapport à la composition totale, le pigment inorganique nanométrique étant du noir de carbone ayant une taille moyenne de particule < 100 nm ; et
d. en option d'autres additifs.

2. Composition selon la revendication 1, **caractérisée en ce que** le rapport de b) à c) vaut de 250 : 1 à 2 : 1.

3. Composition selon la revendication 1, **caractérisée en ce que** le rapport de b) à c) vaut de 15 : 1 à 7 : 1.

4. Composition selon la revendication 1, **caractérisée en ce que** l'absorbeur d'infrarouges est choisi dans le groupe qui comprend des composés de tungstène du type
b1) W_{y}O_{z} où W = tungstène, O = oxygène ; et z/y = 2,20 - 2,99 ; et/ou
b2) MₓW_{y}O_{z} où M = H, He, un métal alcalin, un métal alcalino-terreux, un métal du groupe des terres rares, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi ; x/y = 0,001 - 1,000 ; et z/y = 2,2 - 3,0, ainsi que leurs mélanges ; et/ou
b3) Zn_{w}MₓW_{y}O_{z} où M = au moins un élément choisi dans le groupe constitué par H, He, un métal alcalin, un métal alcalino-terreux, un métal du groupe des terres rares, Mg, Zr, Cr, Mn, Fe, Ru, Co, Rh, Ir, Ni, Pd, Pt, Cu, Ag, Au, Cd, Al, Ga, In, Tl, Si, Ge, Sn, Pb, Sb, B, F, P, S, Se, Br, Te, Ti, Nb, V, Mo, Ta, Re, Be, Hf, Os, Bi ; x/y = 0, 001 - 1,000 ; z/y = 2, 2 - 3,0 ; et w = 0, 001 - 0,015, ainsi que leurs mélanges.

5. Composition selon la revendication 1, **caractérisée en ce que** la composition contient en outre de la triphénylphosphine en tant que stabilisant pour la stabilisation de l'absorbeur IR.

6. Composition selon la revendication 1, **caractérisée en ce qu'**on utilise comme stabilisant pour la stabilisation de l'absorbeur IR un mélange de phosphine, phosphite et antioxydant phénolique.

7. Composition selon la revendication 1, **caractérisée en ce que** le noir de carbone présente une surface de 35 - 138 m²/g.

8. Composition selon la revendication 1, **caractérisée en ce que** le composant d) est choisi dans le groupe qui contient des absorbeurs d'ultraviolets, des agents colorants, des agents de démoulage, des agents ignifuges et des thermostabilisants.

9. Composition selon la revendication 1, ayant une valeur b* (60°) de -2,5 à 0,0.

10. Utilisation d'un noir de carbone ayant une taille moyenne de particule < 100 nm, pour l'empêchement de diffusions provoquées par des tungsténates nanométriques ayant un diamètre de particule inférieur à 200 nm et supérieur à 5 nm dans une composition de polycarbonate.

11. Utilisation d'une composition de polymère selon la revendication 1, pour la fabrication de vitrages pour automobiles, véhicules sur rail, aéronefs et architecture.

12. Produit multicouche contenant
- au moins une couche produite à partir d'une composition selon la revendication 1,
- au moins une couche de protection contre les UV, et
- en option un revêtement anti-rayures.
